# EUROPEAN PATENT APPLICATION

(11) **EP 1 521 428 A1**
(43) Date of publication of application: **06.04.2005**
(21) Application number: 04255893.2
(22) Date of filing: 27.09.2004
(51) Int. Cl.: H04L 29/08, G06F 9/445, H04L 29/06

(54) **Flexible protocol stack**

(30) Priority: 01.10.2003 GB 0322985
(71) Applicant: Kabushiki Kaisha Toshiba, Tokyo 105-8001 (JP)
(72) Inventor: Farnham, Timothy David, 32 Queen Square Bristol BS1 4ND (GB)
(74) Representative: Chisholm, Geoffrey David

(57) **Abstract**

The present invention relates to protocol stacks and protocol layers within protocol stacks especially, but not exclusively, for communications terminals such as mobile phones, lap top computers and base stations. The present invention provides a method of providing a communications protocol for processing a signal in a processing apparatus having a processor and memory, the protocol defined by a plurality of protocol layers; the method comprising: loading a software module into the memory, the module arranged to receive and process said signal according to a set of generic functions corresponding to one of said layers, the module comprising generic function pointers corresponding to said generic functions in a function mapping object; loading said function mapping object into the memory, the object comprising apparatus specific function pointers corresponding to the generic functions in order to map a said generic function to one or more apparatus specific functions; executing the module according to said mapped apparatus specific functions in order to process received signals according to said protocol layer.

## Description

### FIELD OF THE INVENTION

The present invention relates to protocol stacks and protocol layers within protocol stacks especially, but not exclusively, for communications terminals such as mobile phones, lap top computers and base stations.

### BACKGROUND OF THE INVENTION

Communications devices such as mobile phones, lap top computers and base stations increasingly need to support multiple protocol stacks with different configurations to allow support for multiple radio access network standards (potentially simultaneously) potentially supporting different optional features. For example a lap top computer may need to support both secure and insecure Internet access over a wireless local area network, GSM or UMTS, and Bluetooth. The security, provided as part of a VPN feature within the IP protocol stack in addition to encryption at the link layer are provided as different options within the protocol stacks. However, it is important that the unencrypted packets are not forwarded to other insecure (or less secure) stacks. Therefore, protocol stacks supporting these different communication standards need to be provided in a secure framework. Ideally these protocol stacks should be reconfigurable to allow for supporting new communication standards or options and extensions to existing standards by downloading new protocol software modules. In addition, communications devices increasingly need to be able to use the scarce battery and radio frequency resources efficiently.

Therefore there is a need to be able to install communication software to allow new air interface technologies and optional features and extensions to those technologies, including additional functionality such as enhanced security, performance or power consumption optimisation.

Typically, reconfiguration of protocol stacks requires the modularisation of the protocol stack software to be performed in such a way that the interfaces between layers do not change dynamically and are well defined. Protocol stack and network interface driver software frameworks exist on many operating systems to check that the protocol (or driver) modules conform to the correct version of these interface definitions and then utilise execution environment (operating system) specific mechanisms to install the modules into the system. Measures may also be taken to validate the software and enforce restrictions on the functions that can be performed by the protocol software. However, these restrictions do not normally consider the context of the protocol stack arrangement as mentioned previously, which can have different requirements on security (execution environment) protection measures and performance depending on the type of service being supported. Also, these existing approaches do not consider the use of multiple execution environments to implement a protocol stack arrangement.

Normally protocol stacks for mobile communications devices are provided by a single vendor. In the future terminal devices will require more flexible protocol stacks to support different communication technologies and multiple vendors may become involved in protocol stack solutions. This is particularly important in wireless terminals that may need to support several standards with many optional features. Therefore, allowing incremental updating of protocol stacks is very attractive.

Protocol stacks consist of a set of layers each of which can be regarded as a software process performing a series of predetermined steps (corresponding to a protocol) on received packets or messages and associated with a certain protocol implementation. Multiple logical protocol stacks can be instantiated in a given system, for example using multiple threads, to support multiple traffic classes or network interfaces of the same basic type simultaneously. Multiple logical instances of the same protocol stack are traditionally achieved by using a single software (protocol stack configuration) arrangement for all these logical protocol stack instances. However, this limits the flexibility in providing different security, and execution environment optimisations for the different logical instances.

The expected behaviour of the protocol stack is only achieved if all the modules interact successfully with the required timeliness and in accordance to the protocol definitions that are being used. This will also depend on the protocol stack implementations on multiple devices as most protocols rely on interaction between protocol stacks on different devices to set up and maintain communication connections. Flexible protocol stacks that allow dynamic insertion replacement or modification of software layers are always vulnerable to rogue software (which can be malicious or just badly behaved) that can affect the overall operation or security of the protocol stack by either not obeying the protocol definition, sending packets to the wrong recipient, corrupting packets, forming incorrect or invalid packets or intercepting and forwarding packets to purposely eavesdrop or gain access to secure connections, or simply stalling (hanging).

This problem is currently solved by using operating system specific mechanisms to restrict the functionality of the protocol software to minimise the effect of rogue behaviour and to allow the detection and removal of offending modules.

WO 02/28052 discloses a wireless network interface having adaptable protocols that use parameters to define programmable protocol stack behaviour. This allows a limited amount of reconfiguration to take place by using different parameters. However it does not allow dynamic insertion of new protocol software modules or layers. Adaptable protocols that use parameters to define programmable protocol stack behaviour have more predictable behaviour because there is only a limited amount of reconfiguration that can take place. They also do not provide as much flexibility as protocol stacks that allow dynamic insertion of new protocol software modules.

US 5751972 discloses dynamically configuring a computer during run-time to establish a data transfer path using different protocols over a network. The composition of protocol stacks is achieved by using operating system specific linking mechanisms. This has limited flexibility in that each protocol stack module must conform to a specific operating system dependent interface definition. Also, only a limited range of protocol modules are available to ensure the interaction between layers is well defined so that the stack will operate successfully.

WO 01/88707 discloses a flexible protocol stack architecture which employs active programming interface layers between each of the layers of the protocol stack which provides a flexible link between the protocol layer above and below such that this can be changed at run-time. However these additional intermediate layers add to the complexity of the stack and can seriously degrade its performance if mixed execution environment implementation is required. Also, the linking of software modules is performed in an execution environment and programming language specific manner (Java Virtual Machine) and is optimised for exploiting the dynamic class loading concept in Java to allow dynamic reconfiguration of protocol stacks.

### SUMMARY OF THE INVENTION

In general terms in one aspect the present invention provides a flexible protocol stack that abstracts away from execution environment and/or programming language specific features for interacting between protocol stack software layers , thus allowing different software layers to be executed in different execution environments and written in different programming languages. This is achieved by passing the layer, implemented as a code module in working memory, a set of execution environment function pointers within a signal or as a module entry point function parameter, to allow the module itself to then be able to send signals to other modules without the need to perform linking directly between the different modules (protocol layers), or the modules and the operating system. This is as opposed to having the operating system "know" the format of each module, which in turn requires a very specific format for the module to be able to be linked. Thus the layers are "language independent" and can interact with each other using common operating system functions provided by the execution environment function pointers.

For the purposes of the specification, the term protocol stack layer or software layer refers to a functional entity which can be implemented as a code block or module loaded into working memory and executed or "run" by an execution environment, and which processes an incoming signal or packet according to a predetermined set of steps (corresponding to a protocol). The layer outputs a signal or packet having been processed according to this protocol. The concept of layers in protocol stacks is well understood by those in the art, the best example of which is given by the OSI standard which defines software layers within a communications protocol stack according to their roles in supporting this.

A module is defined as a block of program code (especially object or execution code) which is compiled or executable in an execution environment such as a hardware platform containing working memory, associated processor and operating system (and optionally virtual machine environments). In this specification a module will typically correspond to a layer of functionality in a protocol stack. Thus a module will perform one or more predetermined steps or processes on an incoming signal according to the protocol associated with the corresponding layer.

A logical Layer Instance (L.L.I) is a logical instance of the layer software (module), for example corresponding to a single thread. Multiple LLIs corresponding to the same layer software are implementable, for example using multiple threads with the associated code module. Each LLI can be configured (and optimised) differently in the present invention.

In one embodiment the function pointers comprise a table of operating system functions which the module can then call to perform functions such as *"create_new_LLI"* and other operating specific functions in order to interact with the other modules or layers and data such as allocating and accessing signals within the memory.

In another embodiment, a virtual operating system function table is used, each function of which maps onto a corresponding function in a number of different execution environments (operating systems). Thus by using the virtual operating system function table, the software layers and modules can be operating system or execution environment independent as well as language independent.

In particular in one aspect, the present invention provides a flexible protocol stack comprising a number of software layers, each layer comprises a bind message handler for receiving a bind message at run-time to determine which other stack layer to interact with such that the stack is dynamically configurable (and re-configurable by rebinding using a bind message again). Thus the bind command to one layer indicates another layer to which it should pass its output. The interaction as mentioned previously is supported in a programming language independent and preferably execution environment independent way such that the interfaces between layers can be redefined in a much less rigid fashion than previously done. This supports dynamic upgrading of layer software independently (without requiring the upgrading of a common layer interface definition for example) and supporting the provision of protocol stacks by multiple vendors.

This arrangement avoids the necessity for a language or execution environment specific intermediate interface layer between each protocol stack layer as used in some known architectures. The limitation of an interface layer is that the function calling convention (parameter passing mechanisms) and parameter syntax must be well defined and understood and implemented correctly by all the software modules. As these mechanisms are generally dependent on operating system and programming language and can even depend on the compiler as well, and so it limits the flexibility of such a solution in heterogeneous environments. Therefore, the present invention also allows the use of software layers written in different languages and/or operating in heterogeneous processing environments.

In particular in another aspect there is provided a method of providing a communications protocol for processing a signal in a processing apparatus having a processor and memory, the protocol defined by a plurality of protocol layers; the method comprising: loading a software module into the memory, the module arranged to receive and process said signal according to a set of generic functions corresponding to one of said layers, the module comprising generic function pointers corresponding to said generic functions in a function mapping object; loading said function mapping object into the memory, the object comprising apparatus specific function pointers corresponding to the generic functions in order to map a said generic function to one or more apparatus specific functions; executing the module according to said mapped apparatus specific functions in order to process received signals according to said protocol layer.

Preferably the module is arranged to exchange protocol messages corresponding to said signal with other modules, the other modules arranged to process said signal according to a set of generic functions corresponding to other said layers.

Preferably the method further comprising loading said other software modules into the memory, the other modules comprising generic function pointers corresponding to said generic functions in a function mapping object; for each other module loading said function mapping object into the memory, the object comprising apparatus specific function pointers corresponding to the generic functions in order to map a said generic function to one or more apparatus specific functions; executing the other modules according to said mapped apparatus specific functions in order to process received signals according to said protocol layer.

Preferably the method further comprising the or each loaded software module receiving a bind message comprising an identifier for another said module, the first module arranged to exchange protocol messages with the other module identified by said bind message.

Preferably the module has different configuration options for processing said protocol messages.

Preferably said bind message comprises an identifier for determining which said configuration options to implement in the execution of said module.

Preferably the protocol messages, the bind messages and the generic function pointers are in a common generic format.

Preferably the method and further comprising: loading a second software module into the memory, the second module arranged to receive and process said signal according to a set of generic functions corresponding to a second of said layers, the second module comprising generic function pointers corresponding to said generic functions in a second function mapping object; loading said second function mapping object into the memory, the object comprising second apparatus specific function pointers corresponding to the generic functions in order to map a said generic function to one or more second apparatus specific functions; executing the second module according to said mapped second apparatus specific functions in order to process received signals according to said protocol layer; such that the first and second modules are executed in different execution or apparatus specific environments.

Preferably said module is language independent.

Preferably the method further comprising providing high-level software language code for processing said signal according to said set of generic functions corresponding to a said layer; and compiling said code into said language independent software module.

Preferably the method further comprising executing the module in a second execution process according to said mapped apparatus specific functions in order to process received signals according to said protocol layer and in order to provide two logical instances of said module.

Preferably the method further comprising: loading a second function mapping object into the memory, the object comprising second apparatus specific function pointers corresponding to the generic functions in order to map a said generic function to one or more second apparatus specific functions; and in addition to said first execution process, executing the module in a second execution process according to said mapped second apparatus specific functions in order to process received signals according to said protocol layer and in order to provide two logical instances of said module, such that the two instances of the module are executed according to different function mapping obj ects.

Preferably two execution processes execute in different execution or apparatus specific environments.

Preferably the method further comprising the second instance of the loaded software module receiving a second bind message comprising an identifier for another said module, the second instance of the first module arranged to exchange protocol messages with the other module identified by said second bind message.

Preferably the module has different configuration options for each said instance for processing said protocol messages, and wherein each said bind message comprises an identifier for determining which said configuration options to implement in the execution of said respective module instance.

Preferably the or each said module is executed in a separate execution process. Preferably each said execution processes is a thread.

Preferably said exchange of protocol messages is by a separate execution process from that of the module execution.

Preferably the messages are posted and retrieved from persistent message queues in the memory.

Preferably the method further comprising: loading an intermediate function mapping object into the memory, the object comprising intermediate function pointers corresponding to the generic functions and one or more apparatus specific functions in the first function mapping object in order to map a said generic function to one or more intermediate function pointers and further to one or more apparatus specific functions in the first function mapping object.

Preferably the protocol is a communications protocol stack, and preferably a wireless communications protocol stack.

In particular in another aspect the present invention provides a method of providing a dynamically reconfigurable protocol stack for processing a signal in a processing apparatus having a processor and memory, the protocol defined by a plurality of protocol layers; the protocol stack comprising: a number of software modules loaded into the memory, each module arranged to receive and process said signal according to a set of generic functions corresponding to one of said layers, the modules comprising generic function pointers corresponding to said generic functions in a respective function mapping object; a number of function mapping object loaded into the memory, the objects comprising apparatus specific function pointers corresponding to the generic functions in order to map a said generic function to one or more apparatus specific functions in a respective module; the modules executed according to said mapped apparatus specific functions in order to process received signals according to a said respective protocol layer; the method comprising: each module receiving a bind message comprising an identifier for another said module, the receiving module arranged to exchange protocol messages with the other module identified by the respective bind message.

Preferably the method further comprising: loading an upgrade software module into the memory, the module arranged to receive and process said signal according to a set of generic functions corresponding to one of said layers, the module comprising generic function pointers corresponding to said generic functions in a function mapping object; loading said function mapping object into the memory, the object comprising apparatus specific function pointers corresponding to the generic functions in order to map a said generic function to one or more apparatus specific functions; executing the module according to said mapped apparatus specific functions in order to process received signals according to said protocol layer; the module receiving a bind message comprising an identifier for another said module, the receiving module arranged to exchange protocol messages with the other module identified by the respective bind message.

In particular in another aspect the present invention provides a method of for processing a signal according to a protocol, the protocol defined by a plurality of protocol layers; the method comprising: receiving and processing said signal according to a set of generic functions corresponding to one of said layers; mapping the generic functions to apparatus specific functions; executing the mapped apparatus specific functions in order to process the received signals according to said protocol layer.

Preferably the method further comprising: receiving and processing said signal according to a set of generic functions corresponding to the other said layers; mapping the generic functions to apparatus specific functions; executing the mapped apparatus specific functions in order to process the received signals according to said other protocol layers.

Preferably said receiving and processing is arranged such that the order of said generic functions corresponds to said protocol stack.

Preferably the method further comprising receiving a bind message in order to determine the order of said generic functions by which to process said signal.

Preferably said receiving and processing according to the generic functions of each layer are implemented by executing a software module.

Preferably the method further comprising mapping the generic functions to intermediate functions, then mapping the intermediate functions to said apparatus specific functions.

In another aspect the present invention provides an apparatus for providing a communications protocol for processing a signal, the apparatus having a processor and memory, the protocol defined by a plurality of protocol layers; the apparatus comprising: means for loading a software module into the memory, the module arranged to receive and process said signal according to a set of generic functions corresponding to one of said layers, the module comprising generic function pointers corresponding to said generic functions in a function mapping object; means for loading said function mapping object into the memory, the object comprising apparatus specific function pointers corresponding to the generic functions in order to map a said generic function to one or more apparatus specific functions; means for executing the module according to said mapped apparatus specific functions in order to process received signals according to said protocol layer.

Preferably the module is arranged to exchange protocol messages corresponding to said signal with other modules, the other modules arranged to process said signal according to a set of generic functions corresponding to other said layers.

Preferably the apparatus further comprising means for loading said other software modules into the memory, the other modules comprising generic function pointers corresponding to said generic functions in a function mapping object; means for each other module for loading said function mapping object into the memory, the object comprising apparatus specific function pointers corresponding to the generic functions in order to map a said generic function to one or more apparatus specific functions; means for executing the other modules according to said mapped apparatus specific functions in order to process received signals according to said protocol layer.

Preferably the apparatus further comprising means for sending the or each loaded software module a bind message comprising an identifier for another said module, the first module arranged to exchange protocol messages with the other module identified by said bind message.

Preferably the module has different configuration options for processing said protocol messages.

Preferably said bind message comprises an identifier for determining which said configuration options to implement in the execution of said module.

Preferably the protocol messages, the bind messages and the generic function pointers are in a common generic format.

Preferably the apparatus further comprising: means for loading a second software module into the memory, the second module arranged to receive and process said signal according to a set of generic functions corresponding to a second of said layers, the second module comprising generic function pointers corresponding to said generic functions in a second function mapping object; means for loading said second function mapping object into the memory, the object comprising second apparatus specific function pointers corresponding to the generic functions in order to map a said generic function to one or more second apparatus specific functions; means for executing the second module according to said mapped second apparatus specific functions in order to process received signals according to said protocol layer; such that the first and second modules are executed in different execution or apparatus specific environments.

Preferably said module is language independent.

Preferably the apparatus further comprising means for compiling high-level software language code for processing said signal according to said set of generic functions corresponding to a said layer into said language independent software module.

Preferably the apparatus further comprising means for executing the module in a second execution process according to said mapped apparatus specific functions in order to process received signals according to said protocol layer and in order to provide two logical instances of said module.

Preferably the apparatus further comprising: means for loading a second function mapping object into the memory, the object comprising second apparatus specific function pointers corresponding to the generic functions in order to map a said generic function to one or more second apparatus specific functions; and in addition to said first execution means, means for executing the module in a second execution process according to said mapped second apparatus specific functions in order to process received signals according to said protocol layer and in order to provide two logical instances of said module, such that the two instances of the module are executed according to different function mapping objects.

Preferably the two execution processes execute in different execution or apparatus specific environments.

Preferably the apparatus further comprising the second instance of the loaded software module receiving a second bind message comprising an identifier for another said module, the second instance of the first module arranged to exchange protocol messages with the other module identified by said second bind message.

Preferably the module has different configuration options for each said instance for processing said protocol messages, and wherein each said bind message comprises an identifier for determining which said configuration options to implement in the execution of said respective module instance.

Preferably the or each said module is executed in a separate execution process. Preferably each said execution means comprises a thread.

Preferably the apparatus further comprising: means for loading an intermediate function mapping object into the memory, the object comprising intermediate function pointers corresponding to the generic functions and one or more apparatus specific functions in the first function mapping object in order to map a said generic function to one or more intermediate function pointers and further to one or more apparatus specific functions in the first function mapping object.

Preferably the apparatus is a communications terminal, a base station, or a network device; especially a wireless related device.

In particular in another aspect the present invention provides an apparatus for providing a dynamically reconfigurable protocol stack for processing a signal in a processing apparatus having a processor and memory, the protocol defined by a plurality of protocol layers; the apparatus comprising: a number of software modules loaded into the memory, each module arranged to receive and process said signal according to a set of generic functions corresponding to one of said layers, the modules comprising generic function pointers corresponding to said generic functions in a respective function mapping object; a number of function mapping objects loaded into the memory, the objects comprising apparatus specific function pointers corresponding to the generic functions in order to map a said generic function to one or more apparatus specific functions in a respective module; means for executing the modules according to said mapped apparatus specific functions in order to process received signals according to a said respective protocol layer.

Preferably the apparatus further comprising means for sending each module a bind message comprising an identifier for another said module, the receiving module arranged to exchange protocol messages with the other module identified by the respective bind message.

Preferably the apparatus further comprising: means for loading an upgrade software module into the memory, the module arranged to receive and process said signal according to a set of generic functions corresponding to one of said layers, the module comprising generic function pointers corresponding to said generic functions in a function mapping object; means for loading said function mapping object into the memory, the object comprising apparatus specific function pointers corresponding to the generic functions in order to map a said generic function to one or more apparatus specific functions; means for executing the module according to said mapped apparatus specific functions in order to process received signals according to said protocol layer; the module receiving a bind message comprising an identifier for another said module, the receiving module arranged to exchange protocol messages with the other module identified by the respective bind message.

In particular in another aspect there is provided an apparatus for processing a signal according to a protocol, the protocol defined by a plurality of protocol layers; the apparatus comprising: means for receiving and processing said signal according to a set of generic functions corresponding to one of said layers; means for mapping the generic functions to apparatus specific functions; means for executing the mapped apparatus specific functions in order to process the received signals according to said protocol layer.

Preferably the apparatus is further arranged for receiving and processing said signal according to a set of generic functions corresponding to the other said layers; means for mapping the generic functions to apparatus specific functions; means for executing the mapped apparatus specific functions in order to process the received signals according to said other protocol layers.

Preferably said receiving and processing is arranged such that the order of said generic functions corresponds to said protocol stack. Preferably the apparatus further comprising means for receiving a bind message in order to determine the order of said generic functions by which to process said signal.

Preferably said receiving and processing according to the generic functions of each layer are implemented by executing a software module.

Preferably the apparatus further comprising means for mapping the generic functions to intermediate functions, then mapping the intermediate functions to said apparatus specific functions.

There is also provided a computer or processing apparatus program for controlling a processing apparatus to carry out any of the above defined methods. There is also provided a configurable apparatus configured according to any of the above defined apparatus. There is also provided a carrier medium carrying processor control code for implementing a method or apparatus according to any of the above definitions.

There is also provided software modules according to the above definitions, suitable for carrying out or implementing the above defined methods and apparatus. The modules implementing the protocol layers and mapping objects may alternatively be implemented as other datastructures.

There is also provided a configuration manager which may be implemented as a software module, and which is configured to send bind messages to the modules implementing the layers of the protocol stack. The configuration manager may also be configured to load the modules into working memory and pass the respective mapping object to the loaded modules.

The manager may also be configured to download a new or replacement module for implementing a modified protocol stack, the protocol stack being re-configured by passing bind messages to the new or replacement module, and if appropriate the replaced module.

There is also provided a compiler for compiling high-level program code into the modules and/or mapping object, as well as the configuration manager.

There is also provided a method and apparatus for transmitting a module for use in the above defined methods and apparatus. There is also provided a method and apparatus for transmitting program code corresponding to a module for use in the above defined methods and apparatus; and optionally for compiling the code to generate the corresponding module.

In particular in another aspect there is provided a flexible protocol stack comprising a number of protocol software layers, each layer comprises means for receiving a bind message at run-time to determine which other protocol software layer to interact with such that the stack is dynamically configurable at run-time.

Preferably said interaction comprises sending and/or receiving protocol messages from other said layers.

Preferably the bind message comprises an identifier associated with the said other layer which uniquely identifies where the protocol messages are to be sent.

Preferably the bind and protocol messages are in a common generic format.

Preferably each layer further comprises generic functions and means for mapping said functions to execution environment specific functions corresponding to the execution environment in which the layer is to be run.

Preferably said means comprises receiving an operating system table in the bind message at run-time.

Preferably the table has pointers from each generic function to a corresponding execution environment specific function.

Alternatively the table has execution environment specific functions corresponding to each said generic function.

Preferably at least two of the layers are run in different execution environments or are written in different programming languages.

Preferably the or each execution environment for the layers are arranged to assign a standard operating system or custom thread or process of execution per layer.

Preferably the bind message also comprises configuration information for the said layer.

Preferably a said layer is implemented as one of a number of logical layer instances of said layer. Each logical layer instance being uniquely identifiable and configurable and executable in different execution environments.

There is also provided a communications apparatus comprising one or more protocol stacks according to the above definitions.

Preferably a said protocol stack provides a wireless communications link or network.

There is also provided a method of implementing a protocol stack according to the above definitions.

There is also provided apparatus for implementing a protocol stack according to the above definitions.

There is also provided a protocol software layer for a flexible protocol stack comprising a number of protocol software layers, the layer comprises means for receiving a bind message at run-time to determine which other protocol software layer to interact with such that the stack is dynamically configurable at run-time.

In particular in another aspect there is provided a flexible protocol stack comprising a number of protocol software layers, each layer comprises generic functions and means for mapping said functions to execution environment specific functions corresponding to the execution environment in which the layer is to be run.

Preferably said mapping means comprises means for receiving a message containing an operating system function map at run-time.

Preferably the map has pointers or other means of reference from each generic function to a corresponding execution environment specific function.

Preferably the map has execution environment specific functions corresponding to each said generic function.

Preferably the map has pointers or other forms of reference from each generic function to a corresponding virtual operating system map which then enables a an execution environment specific function to be called.

Alternatively the map has virtual operating system functions corresponding to each said generic function, each virtual operating system function corresponding to an execution environment specific function.

Preferably the stack further comprising means for receiving a bind message at run-time to determine which other protocol software layer to interact with such that the stack is dynamically configurable at run-time.

Preferably said interaction comprises sending and/or receiving protocol messages from other said layers.

Preferably the bind message comprises an identifier associated with the said other layer which indicates where the protocol messages are to be sent.

Preferably the bind and protocol messages are in a common generic format.

Preferably at least two of the layers are run in different execution environments and/or are written in different programming languages.

Preferably the or each execution environment for the layers are arranged to assign a standard operating system or custom thread or process or execution per layer.

Preferably the bind message also comprises configuration information for the said layer.

Preferably a said layer is implemented as one of a number of logical layer instances of said layer. Each logical layer instance being uniquely identifiable and configurable and executable in different execution environments.

Preferably different layer instances of the same layer can be run in different execution environments.

Preferably different layer instances of the same layer can be differently configured.

There is also provided a communications apparatus comprising one or more protocol stacks according to the above definitions.

Preferably a said protocol stack provides a wireless communications link or network.

There is also provided a method of implementing a protocol stack according to the above definitions.

There is also provided apparatus for implementing a protocol stack according to the above definitions.

There is also provided a protocol software layer for a flexible protocol stack comprising a number of protocol software layers, the layer comprises generic functions and means for mapping said functions to execution environment specific functions corresponding to the execution environment in which the layer is to be run.

In particular in another aspect there is also provided an apparatus for processing a signal according to a dynamically configurable protocol stack; the apparatus comprising: a number of processing means for processing packets corresponding to said signal according to a layer of said protocol stack; a first said processing means arranged to pass packets processed according to the first protocol layer of the stack to another processing means for processing according to another said protocol layer of the stack; the first processing means having means for dynamically changing which other processing means to pass said packets to, such that the first processing means continues to process packets during said change.

Preferably the processing means are software code modules executed in an execution environment provided by processor and memory means.

Preferably the means for dynamically changing comprises means for receiving a bind message comprising an identifier corresponding to the other module to pass packet to, said identifier being used by said first module to direct packets processed according to the first protocol layer of the stack to the other module for processing according to another said protocol layer of the stack.

In particular in another aspect there is provided an apparatus for processing a signal according to a dynamically configurable protocol stack; the apparatus comprising: processor and memory means for executing a number of protocol layer software modules, each said software module arranged in use to process packets corresponding to said signal according to a protocol layer of said protocol stack; an execution environment software module configured for said processor and memory means, said module being adapted to run one or more said protocol modules; a first said module arranged to receive at run-time a mapping identifier for mapping an instruction in said protocol module to the corresponding instruction in said execution environment module, in order to run said protocol module using said processor and memory means.

In particular in another aspect there is provided a method of providing a dynamically reconfigurable communications protocol for processing a signal in a processing apparatus having memory, the protocol defined by a plurality of protocol layers; the method comprising: loading a software module into the memory, the module arranged to receive and process said signal according to a set of functions corresponding to one of said layers, the module receiving a destination module identifier corresponding to another software module in the memory which is arranged to receive and process said processed signal according to another set of functions corresponding to another one of said layers; the first module arranged to send said processed signal to the other module corresponding to the identifier; executing the first module such that received signals are processed by the module and sent to the other module corresponding to the destination module identifier.

This allows a protocol stack to be dynamically reconfigurable at run-time, without the need for intermediate layers.

In particular in another aspect there is provided a flexible protocol stack comprising a number of protocol software layers, each layer comprises generic functions and means for mapping said functions to execution environment specific functions corresponding to the execution environment in which the layer is to be run.

In particular in another aspect there is provided a method of providing a communications protocol for processing a signal in a processing apparatus having memory, the protocol defined by a plurality of protocol layers; the method comprising: loading a software module into the memory, the module arranged to receive and process said signal according to a set of generic functions corresponding to one of said layers, the module comprising generic function pointers corresponding to said generic functions in a function mapping object; loading said function mapping object into the memory, the object comprising apparatus specific function pointers corresponding to the generic functions in order to map a said generic function to one or more apparatus specific functions; executing the module in order to process received signals according to said protocol layer.

The signal format can be defined using an extensible template definition and signals created and their data elements accessed also using generic functions. The behaviour of the said generic functions for creating and accessing signal data elements can be determined by the template provided at run-time. Thus allowing the data storage mechanisms and format to be optimised for particular execution environments without the software modules using the signal data to be aware of the specific details.

This allows the modules implementing the layers of the protocol stack to be platform and/or language independent.

In general terms in another aspect, the present invention provides a protocol stack having a number of protocol layers, the stack arranged such that there is one main operating system thread of execution associated with each LLI.

In other words, as the (processed) packet(s) are passed from one LLI into another LLI it is simply transferred from on thread to another, by a method typically known as thread message passing, This makes it easier to dynamically upgrade or replace one layer in situ in a protocol stack without affecting other LLI within the protocol stack. Messages passed between LLI can be queued using persistent memory storage mechanisms to enable dynamic reconfiguration in real-time without loss of packets.

In particular in one aspect there is provided a protocol stack for processing a signal, the stack comprising a number of protocol software layers, each layer being executed with a separate process (eg thread), and each layer arranged to pass a partially processed signal to another layer by messaging independent of said processes.

Multiple logical layers instances (LLI) of each layer can be provided by providing multiple execution environment processes to execute a layer, each LLI being capable or having different configuration options, and optionally executing in a different execution environment.

Preferably each layer further comprises generic functions and means for mapping said functions to execution environment specific functions corresponding to the execution environment in which the layer is to be run.

Preferably said means comprises receiving an operating system table in the bind message at run-time.

Preferably the table has pointers from each generic function to a corresponding execution environment specific function.

Preferably the table has execution environment specific functions corresponding to each said generic function.

Preferably at least two of the layers are run in different execution environments or are written in different programming languages.

Preferably the or each execution environment for the layers are arranged to assign a standard operating system or custom thread or process of execution per layer.

Each said layer is implemented as one of a number of logical layer instances of said layer. Each logical layer instance being uniquely identifiable and configurable and executable in different execution environments.

Preferably the stack further comprises means for receiving a bind message at run-time to determine which other protocol software layer to interact with such that the stack is dynamically configurable at run-time.

Preferably said interaction comprises sending and/or receiving protocol messages from other said layers.

Preferably the bind message comprises an identifier associated with the said other layer which indicates where the protocol messages are to be sent.

Preferably the bind and protocol messages are in a common generic format.

Preferably the bind message also comprises configuration information for the said layer.

In particular in another aspect there is provided a method of providing a communications protocol for processing a signal in a processing apparatus having memory, the protocol defined by a plurality of protocol layers each corresponding to a software module in the memory; the method comprising: for each said layer loading a software module arranged to receive and process said signal according to a set of functions corresponding to said layer, and to send said processed signal to another said module; executing each said module as an independent process (eg thread) whereby the processed signal is sent to the other module independent of said process.

This allows different modules to more easily operate in different execution environments, and provides better flow of packets through the modules.

In general terms in another aspect, the present invention provides one or more protocol stacks having a number of protocol layers, the layers can be instantiated multiple times as separate logical instances, for example using different threads.

The multiple LLI can be configured with different options, for example whether encryption is enabled or not. The multiple instances of the same layer may also be configured to execute in different execution environments such as within different operating system processes or even different operating systems. This provides extra security or performance by allowing different layer instances to run in different execution environments which have different security and performance configurations.

Thus two protocol stack instances can comprise of different LLI of the same software protocol layers, each of which directly interacts with LLI of the layer above and/or below within its respective stack.

The interactions between LLI includes passing or transferring of protocol messages using methods that are easily supported within the execution environments supporting the corresponding LLI and also have the appropriate performance characteristics. The mechanisms employed maybe different for different LLI. Therefore, a common naming convention and generic extensible message data format is required for the protocol and control messages to ensure interoperability.

In particular in one aspect there is provided a set of two protocol stacks each comprising a number of protocol layers including a common layer having configuration options, the common layer being instantiated as a logical layer instance for each said stack; wherein each instance has a different configuration.

Preferably each layer further comprises generic functions and means for mapping said functions to execution environment specific functions corresponding to the execution environment in which the layer is to be run.

Preferably said means comprises receiving an operating system table in the bind message at run-time.

Preferably the table has pointers from each generic function to a corresponding execution environment specific function.

Preferably the table has execution environment specific functions corresponding to each said generic function.

Preferably at least two of the layers are run in different execution environments or are written in different programming languages.

Preferably the or each execution environment for the layers are arranged to assign a standard operating system or custom thread or process of execution per layer.

Each said layer is implemented as one of a number of logical layer instances of said layer. Each logical layer instance being uniquely identifiable and configurable and executable in different execution environments.

Preferably the stack further comprises means for receiving a bind message at run-time to determine which other protocol software layer to interact with such that the stack is dynamically configurable at run-time.

Preferably said interaction comprises sending and/or receiving protocol messages from other said layers.

Preferably the bind message comprises an identifier associated with the said other layer which indicates where the protocol messages are to be sent.

Preferably the bind and protocol messages are in a common generic format.

Preferably the bind message also comprises configuration information for the said layer.

In particular in another aspect there is provided a method of providing a communications protocol for processing a signal in a processing apparatus having memory, the protocol defined by a plurality of protocol layers each corresponding to a software module in the memory; the method comprising: for each said layer loading a software module arranged to receive and process said signal according to said layer, at least one of said modules having configuration options; providing two logical instances of said module having configuration options by providing two independent execution processes to execute said module; providing two configuration objects corresponding to different configuration options for the module; executing said module using the two independent execution processes, each process using a different configuration object such that a signal received by each logical instance of the module is processed differently.

This avoids having to make two copies of the code module, each copy being modified slightly according to the different options. It also enables the different instances of the stack to be executed in different execution environments to allow different performance and security measures to be applied.

In general terms in another aspect the present invention provides a configuration manager for use with a dynamically reconfigurable protocol stack comprising a number of protocol layers implemented as modules, the manager arranged to send bind messages to the modules in order to instruct the module which other module to interact with.

In general terms in another aspect the present invention provides a configuration manager for use with a dynamically reconfigurable protocol stack comprising a number of protocol layers implemented as modules comprising generic function pointers, the manager arranged to load said modules in an execution environment and associate a set of execution environment functions with each said module, in order that the generic functions pointers correspond to the associated execution environment functions.

The various aspects of the invention provided above can be implemented as methods or apparatus. The present invention also provides program code or software objects such as modules which provide the functionality of these methods and apparatus when implemented on an appropriate platform (hardware including processor and memory, and an operating system or platform kernel and optionally virtual machine environment). This code may be in the form of object, byte code or executable code blocks or modules, or some other form of data-structure. The code may also be in the form of source code written in a high level language such as C or Java.

The present invention also provides a compiler capable of translating the high level program code into object code modules or data-structures suitable for implementation in aspects of the invention. The compiler may compile high-level code directly into object code suitable for use with embodiments of the invention, or it may compile the high-level code into an intermediate form. In this case another compiler is provided to convert the intermediate form code into object code modules suitable for use with embodiments of the invention.

### BRIEF DESCRIPTION OF THE DRAWINGS

Embodiments will now be described with reference to the following drawings, by way of example only and without intending to be limiting, in which:
Figure 1 a shows a communications protocol stack;
Figure 1b shows a notional layer of the communication stack of Figure 1a;
Figure 2 shows a known architecture for implementing a dynamically re-configurable communications protocol stack;
Figure 3a shows an architecture for a dynamically reconfigurable protocol stack according to an embodiment;
Figure 3b illustrates a bind message;
Figure 3c illustrates a function pointer table;
Figure 3d illustrates a protocol message;
Figures 4a, 4b, 5a, 5b illustrate multiple embodiments of layer software and operating system specific mapping objects;
Figure 6 illustrates multiple instantiation of layers according to an embodiment;
Figure 7 illustrates the instantiation and binding of software layers in a protocol stack according to the embodiment;
Figure 8 illustrates a block code representation of an embodiment;
Figure 9 illustrates a virtual operating system according to an embodiment;
Figure 10a and 10b show a known dynamic linking method and an operating system function table passing method respectively, for C code;
Figure 11a and 11b show a known dynamic linking method and an operating system function table passing method respectively, for Java code;
Figure 12 shows a known thread per message protocol stack architecture;
Figure 13 shows a schematic memory architecture for the embodiment of Figure 10;
Figure 14 illustrates a thread per layer architecture according to an embodiment;
Figure 15 shows a schematic memory architecture for the embodiment of Figure 12;
Figure 16a and 16b show two methods of compiling high level source code into modules for use in an embodiment;
Figure 17 illustrates an example implementation of a Bluetooth ^{TM} complex protocol stack according to an embodiment; and
Figure 18 illustrates an upgraded Bluetooth ^{TM} protocol stack.

### DETAILED DESCRIPTION

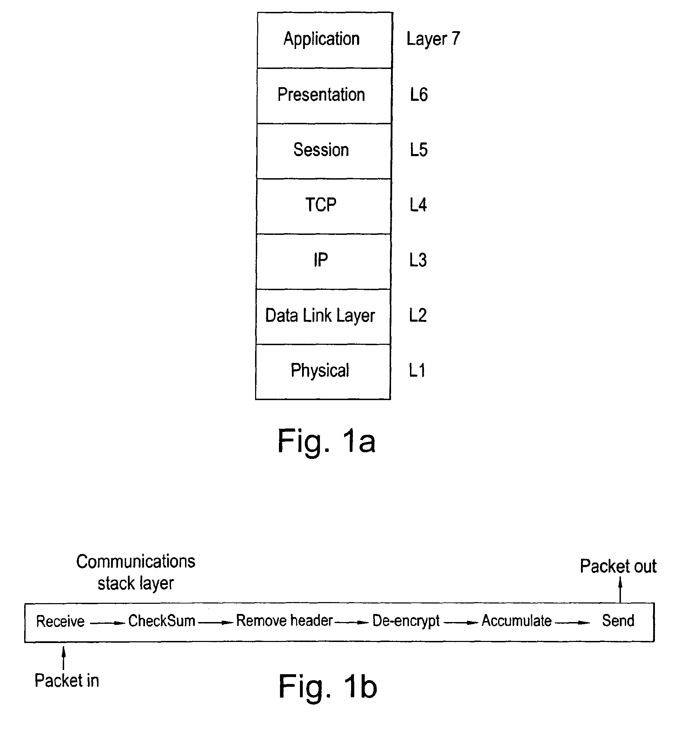

Figure 1a illustrates a communications protocol stack which will be familiar to those skilled in the art. The protocol stack comprises a number of software or protocol layers L1 - L7 through which signals or protocol messages are processed. For example the application (L7) may be a web browser or a controller for a GSM voice call, the signals and messages generated by the application (L7) being processed down through the lower layers L1-L6 in order to communicate with another application across some physical link such as radiowaves, copper wire or optical cable for example.

Figure 1b shows a simplified example of one of the communications stack layers. The actual details of how each layer works will depend on the particular protocol used. The layer receives a packet such as part of a voice call or web page. The layer is a software process performing a series of predetermined steps (protocol) on received packets. The first step performs a check sum calculation and rejects the packet if necessary, then removes the packet header, and another step de-encrypts its data payload. In further steps the layer can then accumulate the data content of a number of received packets before passing a modified and larger packet out to a higher layer. This accumulation can be (and is often) performed in a shared buffer (or queues) to avoid unnecessary memory copying. Typically communications layers will also process packets in the opposite direction from higher to lower levels of layers. In principle two adjacent layers need not "know" what the other layer is doing or how it does it; but in practice the interface between the layers needs to be defined in terms of the exact format of data (packet) content and the buffer storage arrangements passed and how this is achieved, for example knowing which layer to pass this data to and how to start this layer processing the passed data. This limits the flexibility of the stack as described above with respect to known arrangements.

Typically conventional non-reconfigurable communications protocol stacks in mobile phones and the like are set at the time of manufacture, the software code required to instantiate the various software layers in working memory being fixed and stored, possibly as firmware within the phone. This means that if one of the layers needs upgrading, the protocol stack needs to be shut down and the entire code, or at least the upgraded layer code rewritten to the communications device, and then the terminal rebooted and the upgraded protocol stack re-instantiated. This requires any active calls on the communications device to be terminated and the device to be taken off-line for calls. Another problem with this approach is that the different layers are typically interfaced with each other in a very specific manner to make the protocol stack work as noted in some of the above references. This means that the provider of the new or upgraded software needs to know in advance exactly how to interact with the layer above and below for the particular implementation and platform. Again this limits the flexibility of the stack.

Other proposed approaches to support reconfiguration of protocol stacks at run-time allow the downloading of protocol software and dynamic insertion of the protocol software into existing protocol stacks by temporarily suspending stack execution and linking the new software into the existing stack using execution environment and programming language specific mechanisms. This again requires temporary suspension of active communication sessions, as well as the provider of the new software knowing what other stack software to interface with, the shared packet buffer arrangements particular to the layers in question, and how to do this in terms of providing language and operating system specific command and data formats. These approaches also take the risk that if the software is badly behaved it could disrupt many of the active communication sessions until the problem is detected and the rogue software removed. Also, the interface between the layers that permits the insertion of new modules cannot be easily upgraded or individually configured to restrict the interactions between different logical instances of protocol software because the logical instances are not visible to the generic interface layer.

Additionally there is likely to be a future need for layers to be written in a different software language from other layers. For example layers close to the physical layer require rapid processing and so may be precompiled into highly optimised hardware specific machine language for rapid execution whereas layers higher up the stack may be platform independent and therefore operate on a virtual machine environment or an interpreter and so are much slower but more flexible in order to allow platform independence and therefore encourage third parties to develop new applications. However, two layers using different languages can not exploit known common language in terms of language specific data structures, naming conventions (name mangling conventions) and function calling (parameter passing) conventions.

Another problem with current approaches is that they limit the ability to upgrade the stack as each of the layers are tightly constrained by the interface definition (including shared buffer arrangements) supporting the interaction between the layers above and below them which is often language and operating system (execution environment) specific. This situation is exacerbated in the likely event that in future different layers of the protocol stack will be provided by different vendors who will then have to provide an interface which uses the same language (and even in some circumstances the same compiler) and interfacing function and shared buffer formats for the layers that they need to interface with.

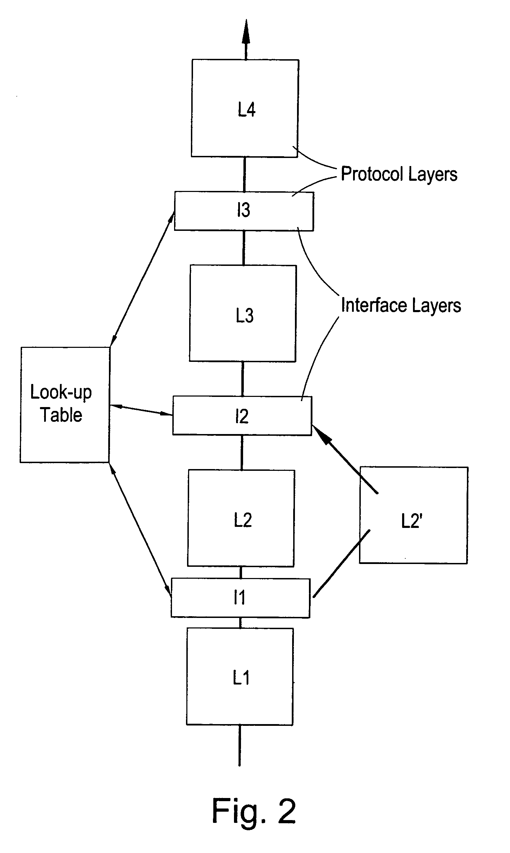

One known approach to providing a dynamically flexible Java protocol stack is illustrated in Figure 2, and utilises interface layers between each protocol stack layer (L1 - L4). This corresponds to the disclosure in WO 01/88707. Between two protocol stack layers is instantiated an interface or intermediate layer with an interface format "known" by the layer above and below it. The interface layer looks up a table to determine which higher protocol layer it should interface with, and then uses a known (Java) interface. Thus in the example shown, an upgraded protocol layer L2' is instantiated and interface layer I₁ determines from the look-up table that it should now direct packets coming from layer L1 to layer L2' rather than layer L2. Layer L2' then directs packets to interface layer I₂ which redirects these to protocol stack layer L3. Thus with the use of these interface layers (I₁-I₃) between each protocol stack layer (L1-L4) and a look-up table, the protocol stack can be dynamically reconfigured. However there is still a requirement for the link between interface and protocol layer to be well defined (the layers are all in a JVM or and use features of the Java language such as class loading, inheritance, class creation and destruction and method identification and calling conventions), and conversion (wrapper functions) performed if necessary to provide the right interface. Also, as the interface layer synchronously supports interactions between adjacent layers, it does not support a shared buffer arrangement for storing packets, which can lead to excessive packet data copying and memory requirements when passing messages between different layers Additionally, whilst this approach is adequate for single language protocol stacks, it would become cumbersome where layers of different languages are used as the various function calls and formatted data must be converted between language specific formats and naming conventions which is processor and memory intensive.

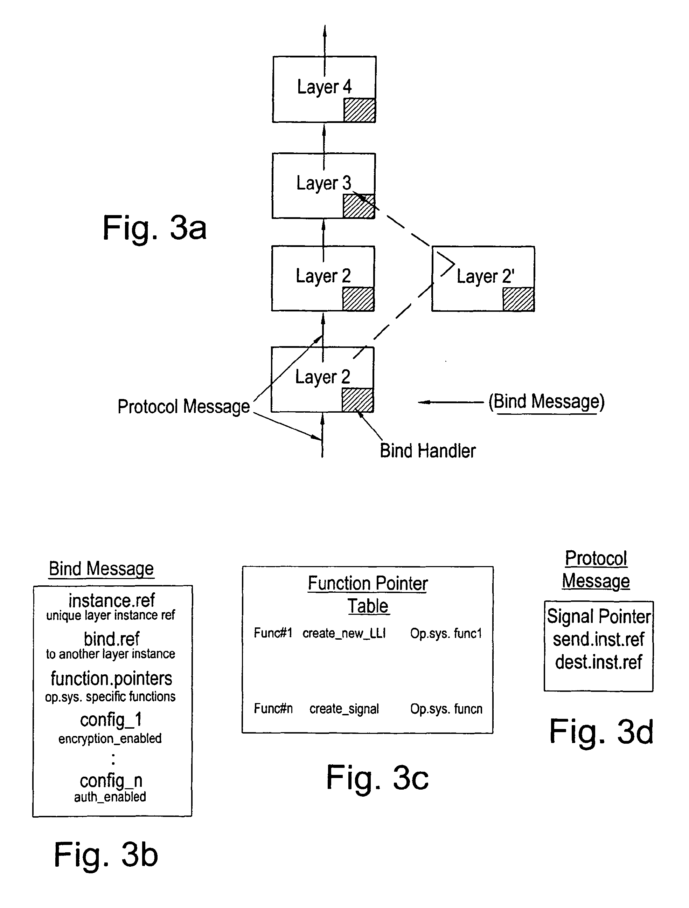

Figure 3a illustrates a protocol stack according to an embodiment. The stack comprises a number of protocol layers (L1-L4), which pass protocol messages (Figure 3d) such as signal packets between them. Whilst these are shown proceeding from lower to higher layers; it will be understood that the same principles apply equally for signals progressing downward through a stack. Each layer receives a bind message (figure 3b) and comprises a bind handler which determines from the bind message which other layer to direct output.

The next layer to which output is directed is indicated by a unique identifier (bind ref.) The preferred method of passing messages between layers uses persistent message queues, but the specific detail of the way in which this is performed and how execution is passed from one layer to another is abstracted away from the protocol layer software as described in more detail below.

Referring to figure 3b, the bind message includes a unique LLI name or identifier (instance.ref) such as L2 for example. Where multiple logical layer instances (LLI) for the same layer are used in parallel (for example in another stack instance processing a different call), the LLI name uniquely identifies that layer instance compared with other instances of the same layer; for example L2₁ and L2₂. Multiple instantiation of layers is described in more detail below.

The bind message can also comprise a table of language specific functions, which represents the operating system Application Programmer Interface (API) that can be dynamically encapsulated into a Java or C++ "protocol stack operating system" class or contained in a C structure and a set of wrapper functions used to access them within the layer software. The table of functions comprises a predetermined set of basic operating system functions such as new LLI instance creation *(create_new_LLI)* and LLI messaging *(send_message. receive_message).* The table provided will depend on the execution environment to which the layer (or even one of the multiple LLI of the layer) will be run. In other words the functions themselves are operating system or Virtual machine (e.g JVM) environment specific, however, because they are passed to the layer (instance) at bind time, this means the layer (instance) itself is operating system and execution environment independent and uses the function table to interact with other layers in its stack in the appropriate way.

In an alternative arrangement, the bind message contains pointers (function.pointer) to the required operating system specific functions which can be stored in a table in shared memory for example.

In the illustration of Figure 3c, predetermined generic functions (Func#1 - Func#n) used by the layers are mapped to operating system specific functions (op.sys.funcl. - op.sys.funcn). Some typical example functions are shown e.g. *create_new_LLI,* which the operating system carries out on behalf of the layer

Thus, each layer will comprise generic function calls (Func#1-Func#n) which allow it to inter-operate with other layers but without knowing which operating system environment it will be executed in as the operating system specific functions are passed to it at bind time. This can also abstract away from the software layers implemented as code modules the specific type of inter-process communication (messaging) and security mechanisms used to support the interactions between LLI The only requirement is that a vendor of a layer must use the appropriate predetermined generic function calls - for example Func#1 to start a new LLI, Func#2 to send a message to another LLI, Func#3 to receive a message from another LLI and so on. Similarly, as two LLI will be passed the same specific operating system functions, then they will be able to interface with each other by using the same message passing functions.

To take this further, the two LLI can be passed different operating system specific functions and thereby operate in different execution environments using a virtual operating system function table as described in more detail below. In this way, the layers are operating system and language independent. The necessary operating system specific functions required to inter-operate with the rest of the stack being passed to them at bind/rebind time.

Different instances of the same layer can execute in different environments by being passed different function tables having different operating system specific functions in their bind messages. Thus a single piece of code (module) can interact with other bits of code (modules) differently (for example function calling in one and asynchronous message passing in the other), purely by having a different type of operating system specific function mapped to the generic send_message and receive_message functions in each LLI. This is because the table used to map the generic send_message function to a corresponding operating system specific function is performed on a per LLI basis. However, if you want a LLI to communicate with another LLI successfully then both need to use the same mapping from the generic send_message and receive_message functions to the operating system functions otherwise the receiving LLI would never receive anything when the LLI performed a send_message.

The bind message can also contain layer instance configuration information (config_1 to config_n) to configure the instance of the layer appropriately to that logical instance of the layer. For example enabling or disabling different optional protocol features.

By using this generic and non-layer specific binding mechanism, each logical layer instance can dynamically (at run-time) be directed to a new logical layer instance to interact with by sending another bind message to that instance. It can be seen that this may include the dynamic insertion of a new layer and additionally allows for language independent interaction between layers.

Referring to Figure 3d, protocol messages are passed between the layers to communicate signal or packet information up and down the protocol stack. Each protocol message will be directed from a sending layer (e.g. layer 1) to a destination layer (e.g. layer 2) according to the bind.ref identifier associated with the sending layer and provided to that sending layer in its bind message (see Figure 3b). The protocol message will also comprise signal data or a signal pointer pointing to the signal data in shared memory. Again the signal data (or pointer) and the identifiers (send.inst.ref and dest.inst.ref) are in a common generic share data format.

The protocol and bind messages are signals passed between protocol stack entities (the various LLIs), and this signal passing can be performed using different mechanisms such as function call or thread messaging mechanisms. Normally thread messaging is between different operating system threads and a message is placed on a queue and then the operating system wakes (schedules) the receiving thread to read the message from the queue.

The generic functions (such as send_message and receive_message) are used to allow message passing in what ever method is appropriate to the target platform for that particular interaction. The code itself does not need to know what method is used. However, to call the send_message function requires that the message that is being sent is in a generic format and is passed to the send_message function in a predetermined manner. The messages can be dynamically created and identified by using a generic create_message function (also supplied within the table of operating system specific functions) which generates a handle (or reference) for the message that can be used within the send_message function. The preferred method of passing a message to the send_message function is to pass it by reference (a pointer to the message is passed in the function call). This minimises the amount of copying of data that has to occur as otherwise the message data would be copied from heap (or shared) memory into stack memory and then back out to heap or shared memory. The preferred approach is efficient and does not involve excessive copying of message data. In fact if the message data is always held in heap or shared memory then no copying at all is required.

Thus the layer software (module) does not require any knowledge of what language or even calling conventions that are used within the software layer (module) that it is sending a message to as it only needs to know the calling convention of the send_message and create_message functions that are available to it. And likewise the receiving software layer (module) just needs to know about the receive_message function. The actual message content then has to be accessed and a common generic shared data storage method is used together with language specific access functions to access this data. In the same manner bind messages or protocol messages (packets) can be accessed in a generic way by each layer regardless of programming language and execution environment.

The functions used to access the data can be passed to the software layers (code modules) as part of the operating system specific functions within the bind message. To enable message (or signal), configuration and shared data to be accessed efficiently by different programming languages and also to allow for upgrading, the format must be extensible. For example an eXtensible Markup Language (XML) or other (such as Abstract Syntax Notation ASN.1) template definition can be used to define the data format and also to access shared data storage structures at run-time by using unique identifiers to identify data elements and their corresponding data types. The language specific data access functions can then retrieve the elements required efficiently. This permits the use of the same data by different versions of protocol software. Older version will not require access to new data members and will not attempt to access them. The removal of the knowledge of obsolete data members is also possible in newer software versions but the data template definition will still have a placeholder for obsolete data members to support older software module versions. Identifiers that uniquely identify data members (including all obsolete data members) are used within the software modules to access these data members. However, because of the indirection provided by the language specific data access functions the actual data can all be stored in a common shared memory region and appropriate security measures (such as data type or element level authorisation using read and write locking mechanisms) to prevent unauthorised access to data by individual LLI.

These functions can be encapsulated within more complex Interface Definition Language (IDL) schemes to allow exploitation of the features of existing or new component technologies. Language specific IDL definitions could also allow exploitation of complex data types that cannot be easily mapped between different languages (for example a set of Java classes and component interface for Java layers and a set of C++ interface classes for C++ layers etc.). The mapping of specific IDL to and from the XML or ASN.1 template would need to be handled by this additional component interface software. To improve the access speed to large quantities of shared data using the common storage structure, the identifiers can be hierarchically arranged in linked lists or sequentially within a data array to minimise the look-up time required to locate the desired elements.

An example of a programming language independent data template definition is an extensible markup language (XML) schema or Abstract Syntax Notation (ASN) tag or data sequence definitions respectively. The data element (or attribute) access functions can utilise indirection (memory pointers) to access the actual items within data element sequences to improve the access performance as shown in the table below. In this manner, the resolving of the data element becomes a look-up operation and a casting or conversion of the result to the required data format as defined in the template.

| Identifier | Type | Memory Pointer |
|---|---|---|
| 1 | INTEGER | XXXXXXXX |
| 2 | STRING | YYYYYYYY |
| . | | . |

Where the example ASN-1 definition is :

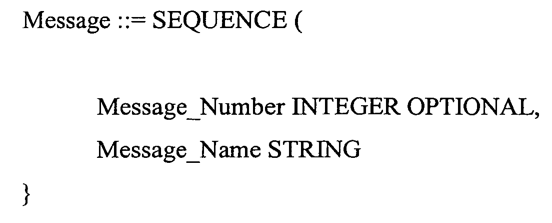

The generic functions used to access the message data could also be contained within the generic operating system table of functions passed with the bind message to allow the actual implementation of the data access functions to be optimised for the platform. For example for the data element with the unique identifier "1243", the software layer calls the generic layer function get_attribute ("1243"). The layer software needs to know the data type of the elements defined in the XML or ASN. template format. The template corresponding to configuration data and messages used by layer software needs to be known by the generic get_attribute and set_attribute functions in order to allow type conversion as appropriate. Therefore, the get_attribute and set_attribute functions take as a parameter a handle (reference) to the template definition. The handle (or reference) is generated by the generic load_template function.. The generic functions get_attribute and set_attribute would also take a configuration data or message handle (or reference) and hold a look-up table in order to be able to store the memory pointer reference for a particular data element and record its unique identifier reference.

Another option is to have two attribute identifiers pointing to the same actual data element. This may be attractive to avoid data duplication when the different identifiers are in fact corresponding to the same data element but with different conversion types. For example if the data element identifier "1243" corresponds to a data element that is specified within the template as being the "message name" and is a null terminated Unicode string. The attribute identifier "1244" could be corresponding also to the same "message name" but a different format, for example 255 byte ASCII character string. The conversion of types can be hidden from the software layers by the get_attribute function. Therefore, if a Java software module calls get_attribute it would be using identifier "1243" and get a Unicode string and if a C++ module wanted to access the data element it could call get_attribute on the "1244" element and get a 255byte ASCII string.

In the preferred embodiment the same template is used for all message data regardless of the LLI which are sending and receiving the messages. This provides a so called Generic Service Access Point (GSAP) to a LLI that is independent of the protocol functionality within the LLI. A possible example generic template definition for a GSAP is shown below.

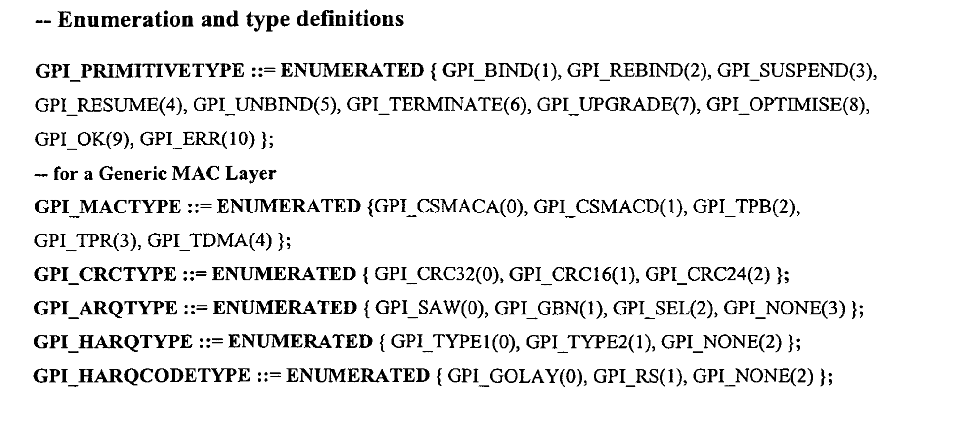

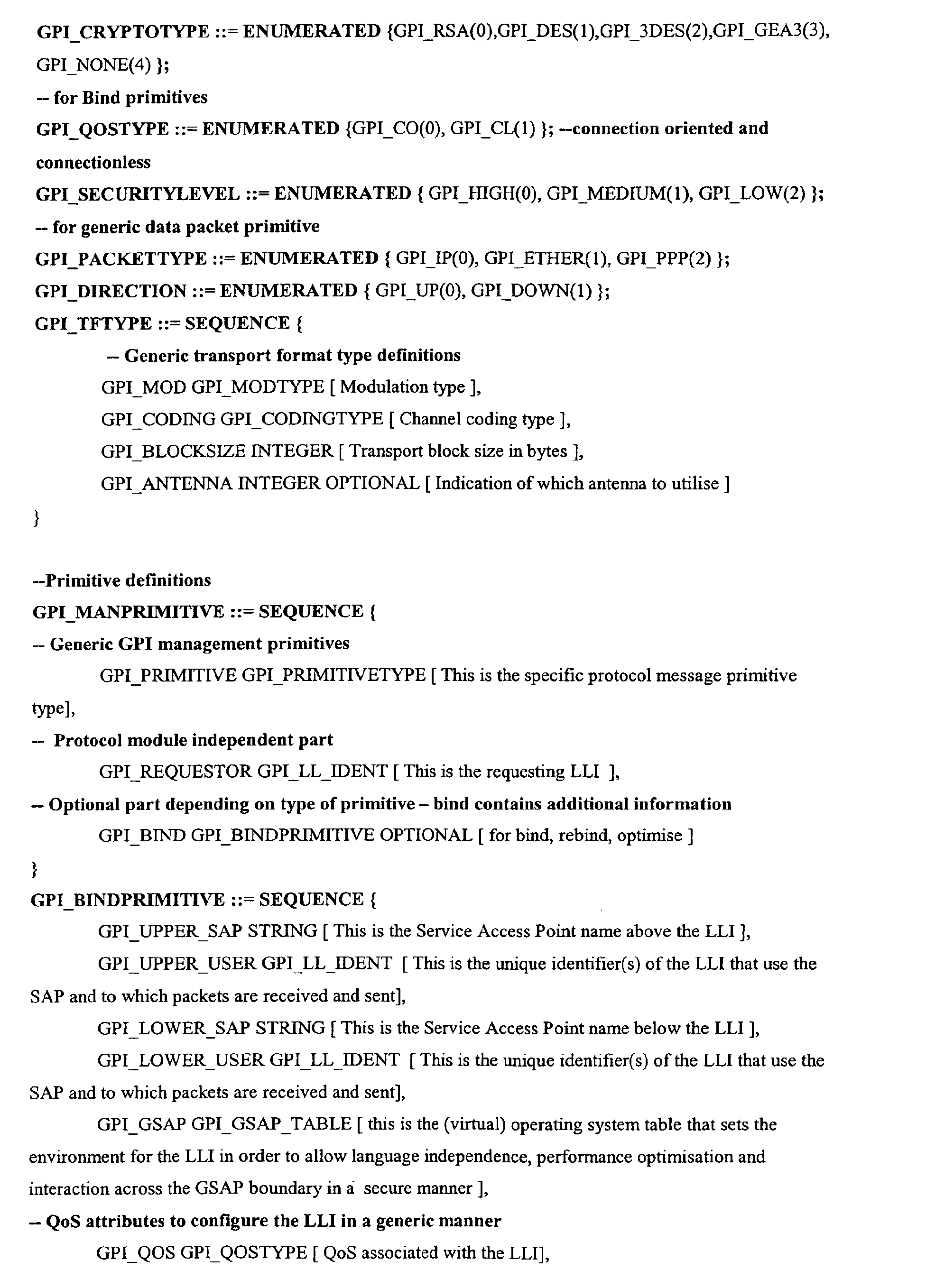

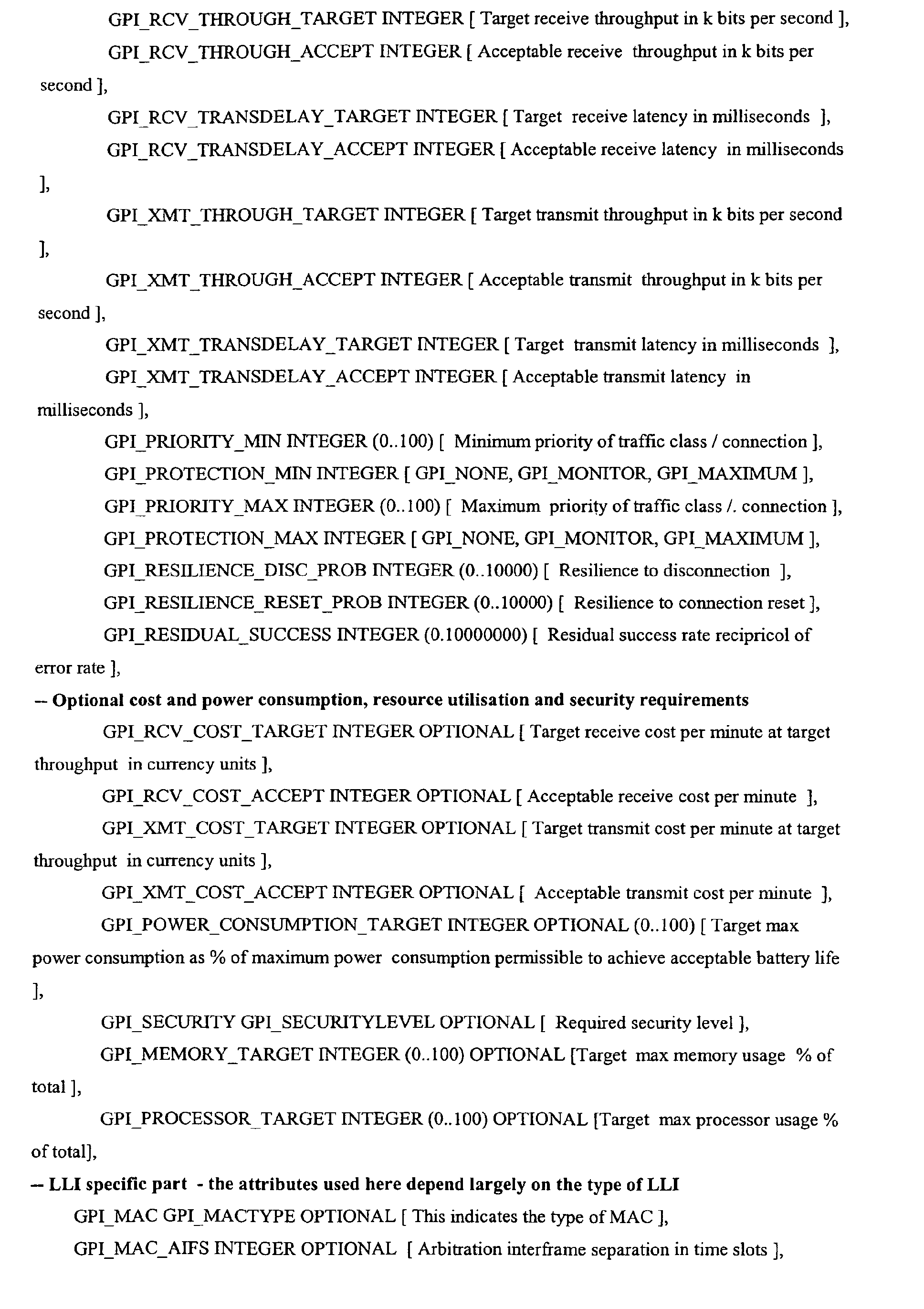

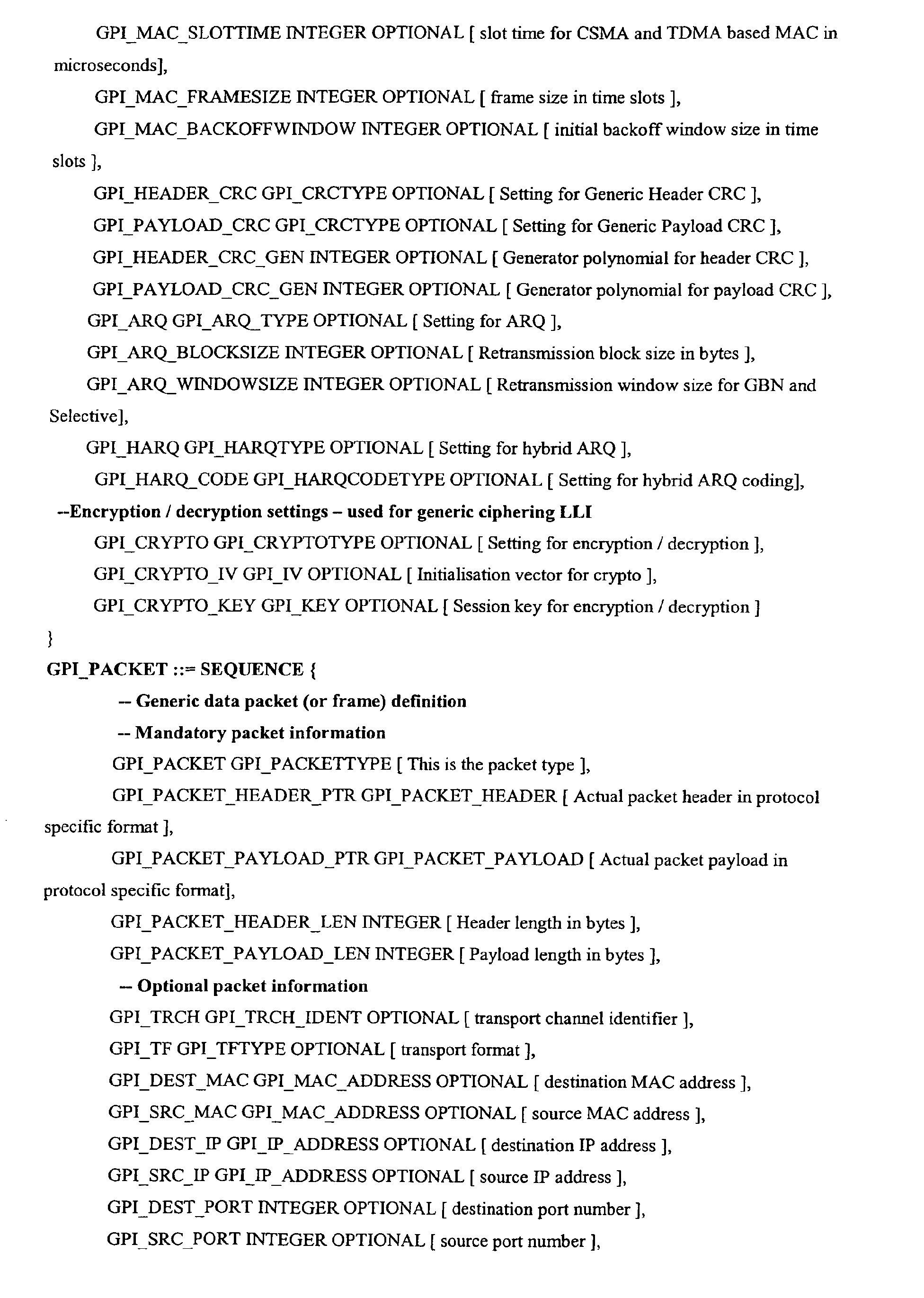

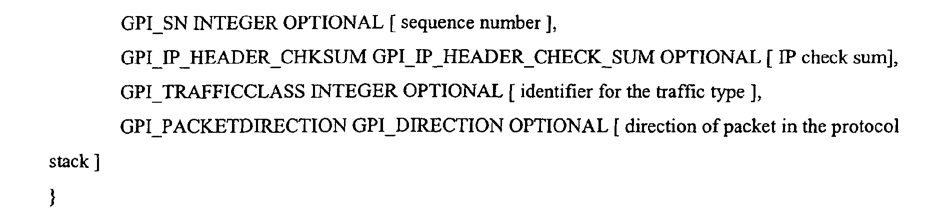

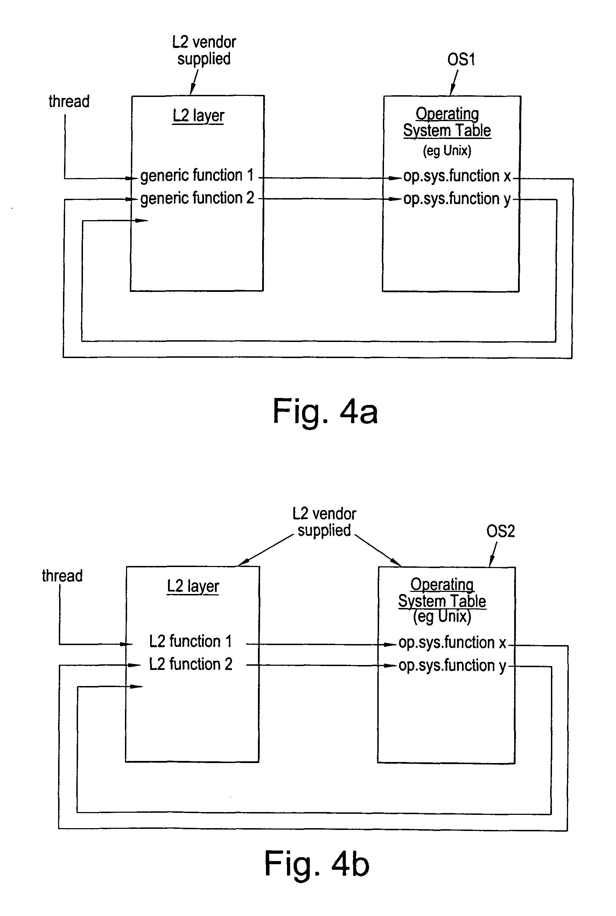

The mapping between generic functions in the layers and the operating system specific functions called by the LLI in their execution environment, can be carried out in a number ways. Referring to Figure 4a, each software layer (e.g. L2), comprises a number of predetermined generic functions. Assuming the vendor of the L2 layer uses the predetermined generic functions, then this layer will interoperate with other layers within the protocol stack. The execution environment supporting the layers of the protocol stack is associated with an operating system table (OS1) or other object which effectively maps the generic functions associated with the layers to operating system specific functions which will carry out the generic functions in that particular execution environment. In the example shown, generic function 1 in L2, for example receive_message, is converted to the equivalent function for the UNIX POSIX based execution environment. The operating system table (OS) or mapping object may be supplied by the operator of the protocol stack for example, or some other entity such as the execution environment provider.

Figure 4b shows an alternative arrangement, in which the software layer L2 comprises functions specific to that layer which can then mapped by an operating system table (OS2) or other mapping object directly from their L2 format to the local operating system format. Thus for example L2 function 1 (which again corresponds to send_message) is mapped by the operating system table OS2 into the local UNIX POSIX based execution environment function or functions for the receive_message function. In this particular arrangement, it is likely that the vendor of the L2 software layer will also supply the corresponding operating system table OS2 or mapping object for a UNIX operating system environment. The L2 vendor may be able to supply a number of operating system tables for different types of operating systems in order to interpret the vendor supplied L2 software layer.

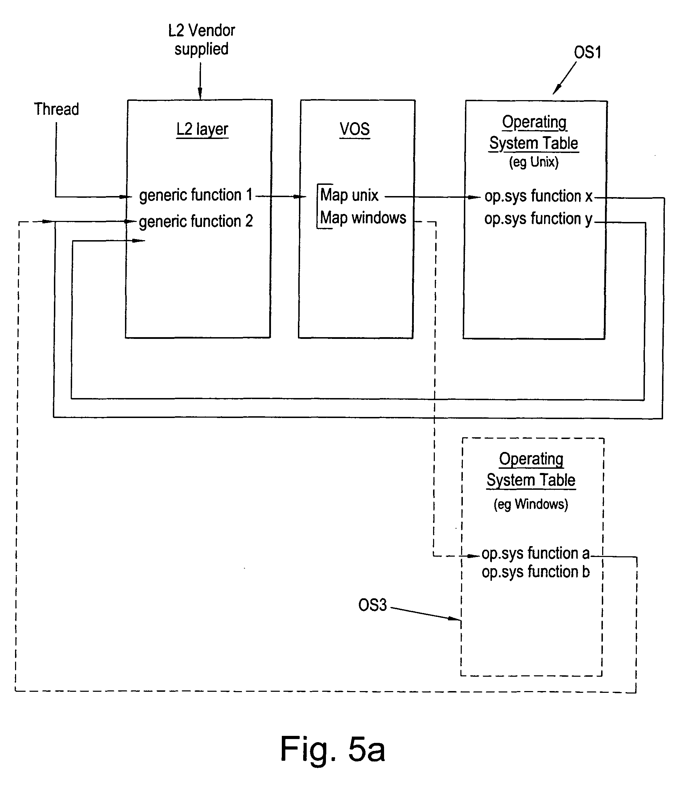

Figure 5a shows schematically the use of a virtual operating system (VOS) which can be used to point a generic function call to the appropriate operating system - UNIX (OS1) or Microsoft Windows(RTM) (OS2) in the example shown. Thus for example where more than one operating system or execution environment option is used to drive normal protocol layers on a device or apparatus such as a base station or terminal for example, the VOS can direct a generic function call from the software layer L2 for example to either the UNIX or Microsoft Windows(RTM) operating system table (OS 1 or OS2 respectively) or mapping object. In the case where two instances of the same software layer are executed in different operating environments, the VOS can map the same generic function (e.g. generic function 1) to say the UNIX operating system table (OS1) for the first LLI, and the Microsoft Windows(RTM) operating system table (OS3) for the second LLI, where the same generic function corresponds respectively to op.sys function x and op.sys.function a. Because the software layer L2 is using generic functions, the vendor of L2 need only supply the actual layer software (module), and needn't be involved with the VOS or operating system table software. The operation of the VOS is described in more detail further below.

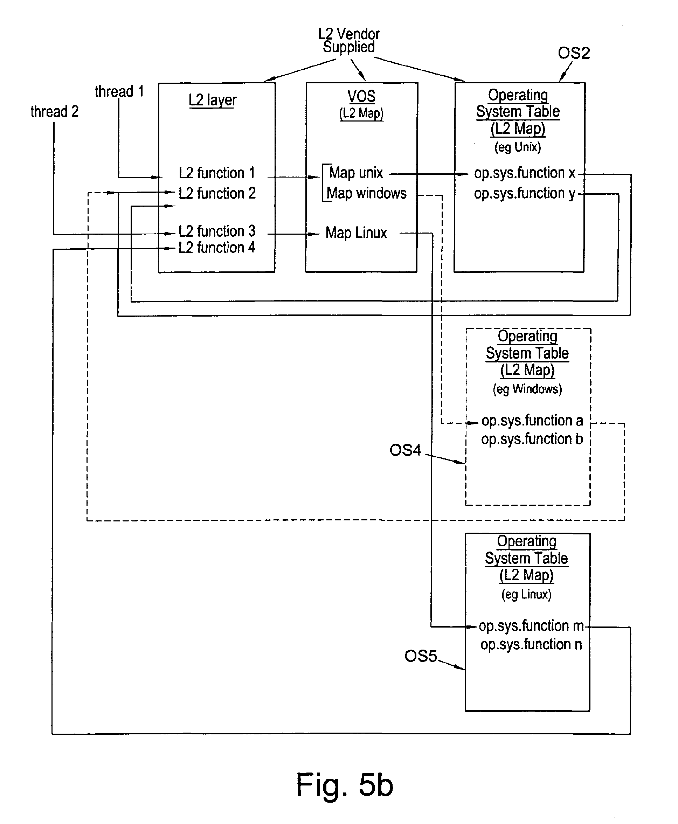

Referring now to Figure 5b, the vendor supplied L2 software layer comprises layer specific functions which are then mapped by a virtual operating system (VOS) that could also be supplied by the L2 vendor which can map the L2 specific functions between different operating systems, again using operating system specific tables (OS2, OS4, OS5) or mapping objects which could also be supplied by the L2 vendor in order to map the L2 specific functions to the respective operating system functions, for example UNIX and Microsoft Windows(RTM) respectively. Thus various embodiments can be implemented to achieve the language and/or operating system independence of the protocol layer software.

Figure 5b also illustrates how two threads, for example each corresponding to different LLI, can be mapped to different operating system tables for execution in different execution environments. Thread1 is pointed to a specific entry in the VOS table or map by an L2 specific function (L2 function 1), and in turn is pointed to a specific entry in the UNIX operating system table OS2 which corresponds to a function (op.sys.function.x) that can be executed in the UNIX environment. Thread then returns to the next function pointer (L2 function 2) in the layer L2 module. In a different embodiment, thread might be pointed to a Window's operating system table OS4 by the VOS, for execution of a Windows specific function (op.sys.function.a) corresponding to the L2 specific function pointer (L2 function 1) in the layer L2 module, in a Window's environment.

Thread2 may correspond to a different LLI of the same layer L2 which is executed in a different Linux execution environment. In this scenario an L2 specific function pointer (eg L2 function 3) is mapped to a Linux specific function (op.sys.function.m), which is executed and thread2 then returns to its next function pointer (L2 function 4) in the layer L2 module.

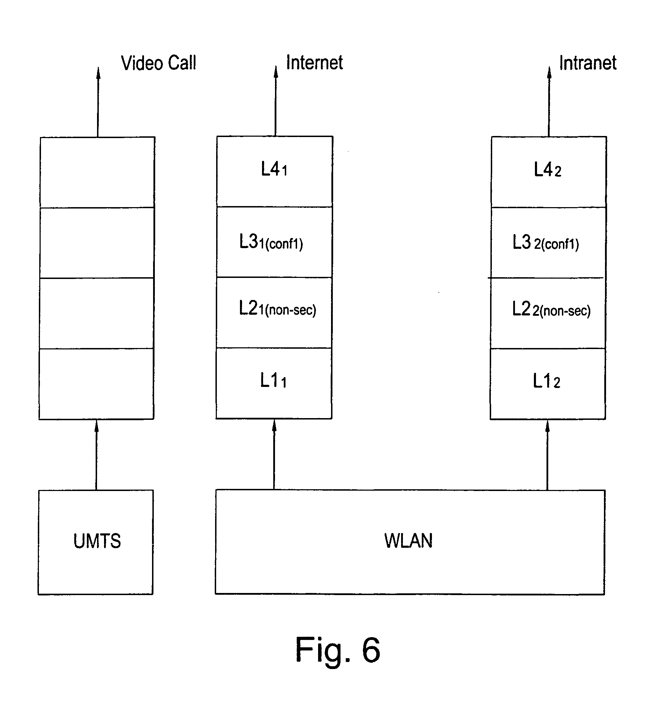

Figure 6 shows multiple instantiations of layers in multiple protocol stacks. A UMTS video call and two WLAN Internet browsing protocol stacks are shown active simultaneously. One of the Internet stacks supports unrestricted Internet browsing, whilst the other supports browsing an intranet and as such must support encryption (for example based on a Virtual Private Networking VPN protocol). The two browser stacks each have four protocol layer instances (L4₁-L1₁, and L4₂-L1₂ respectively) coupled to the WLAN, however the layer 2 instances (L2₁ and L2₂) are configured differently in each. This is illustrated by L2₂ (sec) in the Internet stack which indicates a second instance of layer 2 which supports encryption, and L2₁ (non-sec) in the Internet stack which indicates a first instance of layer 2 which does not support encryption. These configurations will have been determined by the original bind message sent to each instance of this layer (L2₁ and L2₂). Layers 1, 3 and 4 are the same for the two browser stacks, and contains separate (L1₁, L3₁, L4₁, and L1₂, L3₂, L4₂ respectively), but identically configured instances of the respective layers.

The execution environments used to execute the secure stack layer instances may be configured to prevent any possibility of access to message or configuration data from the insecure instance. For example, this can be achieved by using an operating system function table that performs authorisation of all memory access and messaging operation to isolate them from secure stack instances. The underlying implementation of the send_message function for example is determined by what the VOS and/or operating system mapping object supplier wants the function to do. Therefore, if for example the software layer is un-trusted then the functions performed in the send_message and receive_message functions will be much more security conscious. This may include for example authorisation functions coupled to the basic retrieve data function. In a further example the create_LLI function creates a separate process with its own memory region to ensure that there is no possibilty that the layer can access memory used by a trusted software module. It could even be executed in a separate operating system environment if it was deemed that the operating system itself was not trusted enough.

Each layer may also be implemented with different performance optimisation, for example with priority given to the stack instance performing the processing intensive encryption operations.

The second LLI for (L2₂) of layer 2 uses the same code module (Layer 2) as the first LLI (L2₁), but is a new logical entity (in this case an operating system thread of execution or process) rather than a further copy of the code module loaded into working memory. For example the second LLI (L2₂) may be a second thread of execution within this code module which is controlled by the operating system and has its own unique identifier and configuration associated with it. This configuration information is only accessible to that LLI (eg thread) of the logical layer and to a controlling entity (CM which is described in more detail below) which sets up the configuration for each instance. The interaction between LLI is also configured by the CM and can prevent LLI that are not required to interact from interacting (via execution environment configuration measures).

Furthermore, although the two LLI (L2₁ and L2₂) of layer 2 support common functionality, they can be configured differently. In this example L2₂ supporting encryption/decryption and L2₁ not. These configuration settings are set by the bind message, and can be stored in appropriate locations in the stack or a table in working memory associated with each instance (LLI).

A second LLI of the layer 2 software will have a different LLI identifier [instance. ref], as well as a different bind reference [bind. ref] linking it to a different output layer. The operating system function table (or operating system class) identified by [function. ref] can be the same operating system table as used by the first LLI of layer 2, unless it is operating in a different execution environment in which case it will require a different operating system function table to map the generic functions to the operating system specific functions needed to carry out these functions within its respective execution environment. The second LLI could also have its own execution stack (L2₂ stack) and heap memory. Each LLI will have the same configuration options available but can enable/disable these differently. These can be stored as parameters in their respective LLI configurations.

Each layer will utilise the predetermined generic function calls, which will include thread management as well as memory management functions. These are then mapped at run-time onto the set of operating system specific functions on the target device. Data which is accessed by more than one LLI (such as the operating system function table and the signal packets) is provided in a predetermined format, which enables each LLI to access this information using the set of predetermined function calls.

A bind signal [bind. para] can be received by a LLI at any time, including after the original bind signal, and thus allows the configuration options of the LLI to be changed, and in addition allows the LLI to be bound to another LLI by changing the bind. ref parameter, thus allowing dynamic rebinding of the protocol stack.

A LLI of a protocol layer can be generated by instantiating an operating system thread that has its own execution stack to provide a degree of control and isolation from other threads of execution (for example being able to terminate and provide priority based multi-tasking between different threads). Alternatively, different LLI can be instantiated as different operating system process, to provide a greater degree of isolation and control by giving each process its own memory heap and preventing access from other LLI. However, this incurs the penalty of increased overhead in performing priority based multi-tasking (i.e. context switching between processes as apposed to threads). Finally, the LLI can be instantiated within the same operating system thread. This has the benefit that there are minimal overheads in setting up and controlling the LLI, but there is no separate stack or heap and therefore the access to data (such as LLI configuration) and control over its execution (i.e. prioritisation etc.) could depend heavily on the parent thread if the operating system security measures are being relied upon. In this latter case it is preferred if the programming language and execution environment used by the LLI is the same as its parent thread, but this is not mandatory.

Further to the above operating system execution environments it is also possible to instance an LLI in an external programmable device such as an FPGA or DSP. These execution environments are much different to the environments within a single (or multiple) processor arrangement under the control of the same operating system. However, the virtual operating system function table (VOS) can allow the inter-device communication complexity to be abstracted away from the software modules implementing the LLI on the different devices.

In the above manner multiple logical layer instances can be created in different execution environments using different threads of execution or processes. Further to this each LLI can be configured with different protocol features (configuration options) but can access signal message data and other shared data using common data access mechanisms. A special case occurs when more than one LLI are created within the same thread as mentioned above.

As already discussed, it is possible to execute different LLI of (the same or different) protocol stack layers in different execution environments to provide different levels of security and also performance. For example a Bluetooth stack may be supporting both a secure high speed connection and an insecure low speed connection. The execution environments for the LLI handling the secure high speed connection can be optimised for security and performance and the LLI supporting the low speed connection could be supported in a less secure and less optimised execution environment.

This approach limits the interaction between LLI and isolates them appropriately using different execution environments if necessary (with the appropriate security measures) for each LLI. In this way highly trusted software can be allowed more freedom and can execute in more optimised execution environments without rigorous run-time security checks being performed or restrictions on functionality, whereas LLI using less trusted software is executed in more secure environments with more restrictions on the permissible interaction with other LLI. These measures will also depend not only on the trust level within the software but on the integrity and other security requirements (such as privacy and confidentiality) associated with the type of service being supported by the LLI.

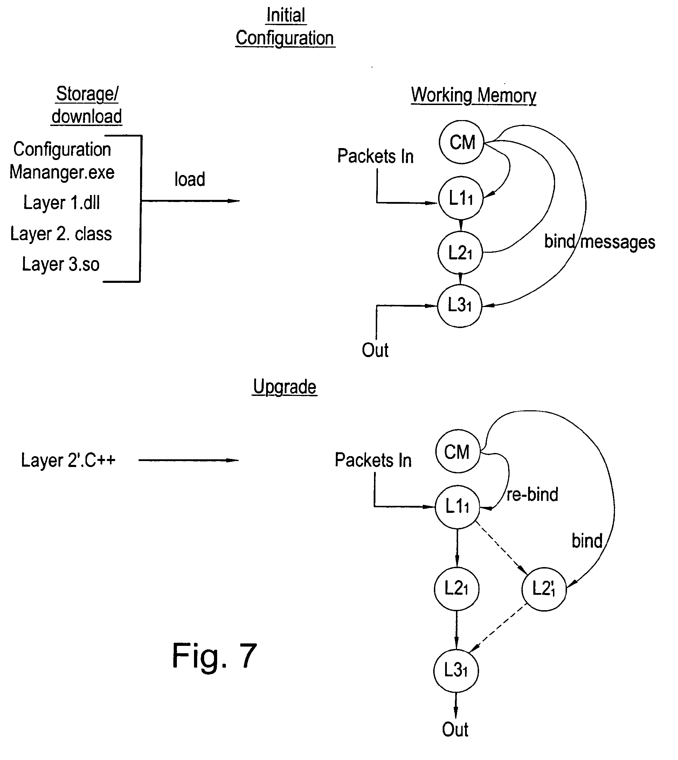

Figure 7 illustrates setup and upgrade scenarios for instantiating layers and for binding one software layer to another in a cellular phone for example. The phone either stores or downloads a number of software code modules which are loaded into working memory directly (i.e. natively) or using virtual machine environment mechanisms (such as the Java class loading principle) and the entry points identified. In the example shown this includes layers 1-3 and a configuration manager (CM) which controls the protocol stack's arrangement by loading the code modules corresponding to the software layers into working memory, calling the entry points and sending appropriate bind messages to configure or reconfigure the layers. For example the bind message sent to layer 1 instructs it to "bind" to layer 2.

In an upgrade scenario where layer 2 is replaced by layer 2', the layer 2' software layer file or code module is loaded into working memory (L2') and the configuration manager (CM) calls the layer entry point to the new layer. It then issues a bind message to layer 2', to direct its output to layer 3 and setup the appropriate protocol options. The configuration manager also directs a bind message to layer 1 to redirect its output from layer 2 to layer 2'. This upgrade reconfiguration happens during run-time and also only requires a relatively simple bind message to implement. It also allows any packets passing through (old) layer 2 (L2) to continue being processed and passed on to layer 3 (L3) so that the associated session is not terminated by the dynamic reconfiguration. Thus there is no need for session termination during reconfiguration of the stack, providing that the new instance has access to the configuration (including state) data of the old instance.

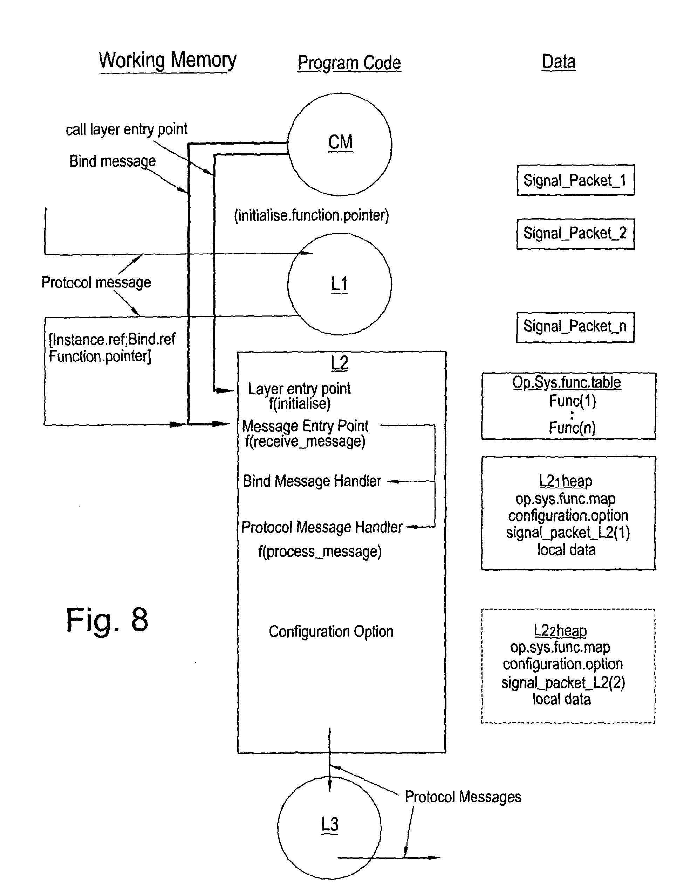

Referring to Figure 8, to instantiate the first instance (L2₁) of layer 2 for example, the configuration manager (CM) loads the layer 2 code module into the program code area of working memory (or the virtual machine environment). The configuration manager then starts a LLI by calling the entry point of the code (layer entry point) in working memory directly in the case of native software modules or calling the layer entry point member function (the run method) in a virtual machine environment.

The CM invokes the loading procedure and so for Java that means loading a class file and for native layers that is loading a section of code into memory in the manner appropriate for the execution environment. As CM knows the execution environment it knows the way to load the module, and pass the default appropriate VOS and/or operating system table (OS). Examples of these are described in more detail further below. In native code layers this could require the invoking of the entry point by locating and executing the entry point function. The entry point function needs to have a default behaviour that enables the bind messages to be received. For example in a Java class this could invoke loading the default VOS and/or operating system specific classes into the JVM in order to be able to then call the receive_message function. In a native layer the entry point could contain a parameter that is a pointer to the default VOS and/or operating system specific (OS) table. Once the module entry point is initialised (for instance it could involve copying of the VOS or OS table and allocating some working or heap memory) it calls the receive_message function in the VOS (or operating system function table) and this then does nothing else until the bind message is received.

The initialise function as stated above is simply the boot-strap method of getting the default VOS (or operating system) table, copying it if necessary (or pointing to its location in shared memory) and calling the receive_message function.

The receive_message function is in the VOS or operating system table (OS) and so it is the VOS or OS that determines how the message is sent (either by function call or operating system thread messaging etc.). The bind message is a specific message type (all messages have a unique identifier to allow determination of the type of message). Therefore, other messages (apart from a terminate which will normally force a clean exit) are ignored when waiting for the bind message.

The bind handler simply calls create_new_LLI which again is a VOS or OS function that could invoke a new thread or process instance or in fact may not do this and just modify the LLI table. However, the configuration information from the bind message is passed to the create_new_LLI function in order to allow the configuration to be set up for that LLI. This includes a reference to the specific VOS and/or OS table to be used by the LLI. This may be different from the VOS and/or OS table copied or used by the initialisation function, for example if the layer needs to pass protocol messages to a layer in a different execution environment. The new thread calls the receive_message function within the specific VOS (or operating system table) to wait for a message to process.

As discussed above, the bind message contains interaction or interfacing information to direct the output of the layer to the next layer. The bind message may also comprise the necessary function calls to do this (the function table). For example an initialisation template of functions or function pointers may be passed to the module entry point, whilst a more specific template of processing functions may be passed to the module by the bind message, depending for example on the configuration options selected for the associated LLI, and/or its execution environment. The CM can then instruct the execution environment specific security mechanisms to allow interaction from the new LLI to permissible other LLI and can optionally set access control mechanisms on shared configuration data to allow access only to the parts of the configuration data that is permissible by the new LLI.

The bind message configuration options can determine the features to enable such as whether or not to enable encryption within the layer by using generic configuration preferences for security, performance and power consumption. Where multiple protocol stack instances are in use simultaneously, there may be multiple LLI per layer, and these are identified with unique instance identifier (instance.ref). It may be that the different LLI of the same layer have different configurations, some supporting encryption and some not for example.

The entry point calling and parameter passing are supported in a generic manner regardless of the specific detail of the implementation. Preferably an ANSI standard C (otherwise referred to as Cdecl) convention is used to pass a parameter for native software modules, (function.pointer) or (start.pointer) for example, to the entry point that provides execution environment related functions such as thread creation and messaging related functions (including configuration data access functions) . However, for Java layers the Java class for the software layer extends the *Thread* Java class and the *run* method is invoked automatically when the layer is loaded into the JVM. If the native layer entry point is called to instance a new thread then a new instance is created in a new thread of execution and the entry point returns..

Alternatively, (particularly when the layers execute in virtual machine environment but not restricted to just these layers) the entry point class (or location) can be indicated in a manifest (meta) information file that accompanies the layer software module. When the bind message is processed, the new instance thread is created using create_new_LLI and it now waits for a protocol message using the receive_message function.

Each layer instance configuration data will contain information regarding the next layer instance(s) to send packets or protocol messages such as [signal.pointer]. Thus when a layer requires sending a packet (contained within a protocol message) to the next layer the get_attribute function for the bind reference (bind.ref) is used to obtain the next layer instance to send the message to from the LLI configuration data.

When instantiating multiple LLI of the same layer, the bind handler will form a new instance of the configuration data for the new layer instance (in L2₂ stack). The configuration data as stated before will contain the unique identifier for the instance and once the new thread instance has been created an acknowledgement is returned to CM which can then setup the appropriate execution environment security measures. A bind message can be sent directly by the CM to a LLI to change the configuration of the instance.

As described previously the incoming bind message comprises an instance number [instance. ref]. The bind reference [bind. ref] identifies the LLI for the layer above the present LLI to which output protocol messages should be directed. The function pointer [function.pointers) identifies the operating system function table (OS and possibly VOS) appropriate to the particular LLI, such that when the layer calls one of a predetermined number of functions (for example *"create_new_LLI"),* the function pointer points to an appropriate location and memory which contains the correctly formatted function call for this function for the particular execution environment or operating system in which the LLI is operating. In other words, the operating system function table maps "generic" function calls within the LLI to the language and operating system dependent functions used by the operating system to carry out these functions. The table of functions will typically include memory access and management functions including accessing signal packets or other messages passed between the layers. Thus for example layer 1 may pass a signal packet (for signal_packet_2) pointer [signal.pointer] to a LLI within layer 2 using the operating system function *send_message.* This allows the layer 2 LLI to access this particular signal packet and further process it according to its internal protocol functions using the functions provided by the operating system function table, and utilizing its own LLI execution stack (L2₁ stack).

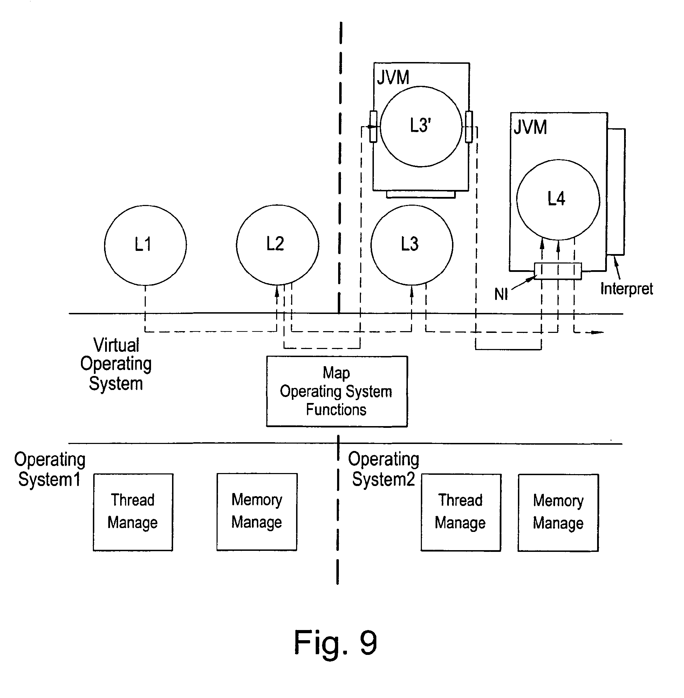

As discussed above, a common platform independent virtual operating system (VOS) function table can be utilised to provide access to the execution environment functions and LLI configuration information. This improves execution environment (operating system and virtual machine) independence, and is illustrated in Figure 9. There are shown five layers (L1 - L4), including an "old" layer 3 (L3) as well as an upgraded layer 3 (L3'). Two of the layers (L3' and L4) are shown operating within a Java Virtual Machine (JVM). The JVM requires an interpreter or virtual machine environment to interpret the code of the software modules corresponding to these layers in real time, and also provides a native interface (N1) for interfacing with non Java software. The other layers (L1 - L3) are precompiled into object code and executed by the operating system natively at run time.

It also allows multiple execution environments to be provided as shown where operating system 1 and operating system 2 each execute different layers, but the layers can still communicate with each other.

The generic function calls in the layers are converted to actual operating system specific functions using the operating system function tables (OS). In the case of a VOS, a further conversion or mapping is required. The bind message to each LLI provides function pointers to the VOS function table which itself points to operating system specific functions in the OS's to enable the layers to execute. This provides operating system independence as the VOS function table can be re-pointed at different operating system specific functions. For example the CM can instruct the LLI (via a bind message) to change its VOS table of operating system specific functions corresponding to the generic functions used by the LLI from say UNIX based POSIX functions (OSx) to UNIX based system V operating system functions (OSy) dynamically at run-time. The dynamic changing does however, need care as certain operating specific functions contain or change system state related information (particularly semaphore and other system resource handling functions like memory allocation) therefore, the VOS concept can allow the ability to seamlessly switch between OS environments if necessary by providing intelligence and operating system abstraction within these indirection mechanisms. It also allows software code modules to be written in the most generic manner possible to support different execution environments.

In the protocol software, string manipulation is not often performed, however any frequent operations like "calculate_crc" or "convert_ip_address_2_string" can be included as generic functions with corresponding operating specific functions in the operating system table (OS) or VOS table. In an alternative arrangement, certain signal data manipulation function such as encryption and decryption be implemented in a generic encryption/decryption layer that can be configured to perform different encryption and decryption operation. This is a layer that contains the most mathematical functions and can use (if necessary) a VOS or operating system table (OS) that has mathematical extensions because it can operate in an execution environment (like a co-processor) with performance accelerators for these complex mathematical functions. Then the other or general protocol layers will use a general purpose VOS or operating system table (OS) without these extensions.

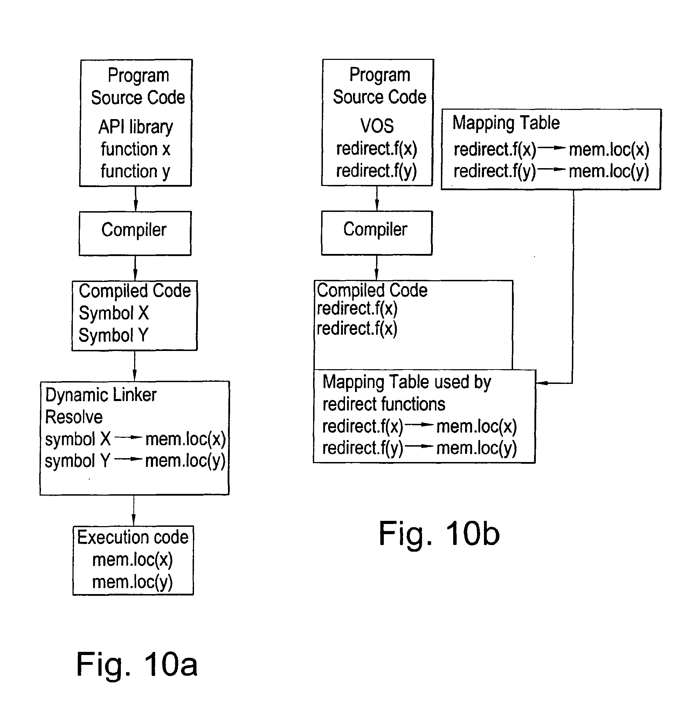

A method by which the function pointers are passed to a module in an execution environment and language independent way is illustrated in figures 10a and 10b. Specifically this shows a native code example, such a C, figure 10a showing a known dynamic linking method, and figure 10b showing a method of passing function table pointers according to an embodiment.

Referring to figure 10a, a vendor of a software module develops a source code program (in this example in the C programming language) comprising a series of API functions (x and y) and variables to interact with data stored in the memory of the target platform (hardware, function library set, and operating system functions such as input/output), and possibly other API library modules operating on the platform. The source code is compiled into object code by a known compiler, which translates the series of functions into binary machine (or object) code specific to the target platform. The binary code comprises a series of place-holders or symbols (symbol X and symbol Y) which each correspond to one of the series of functions (x and y) in the API library modules.

When the object code is loaded into memory on the target platform for execution, a dynamic linker inspects the code and replaces the series of symbols (symbol X and symbol Y) with the memory locations of the API library functions (mem.loc(X) and mem.loc(Y)) in a previously loaded API library module which corresponds to the functions (x and y respectively) in the library source code. If the library module is not already loaded then it can be dynamically loaded by the dynamic linker (or class loader in the case of a Java based implementation). The platform can then execute the code by stepping the program counter through the series of memory locations containing the program instructions and jumping (branching) to the memory locations corresponding to the API library function calls (mem.loc(x), mem.loc(y)) as required by the software module.

Referring to figure 10b, the vendor (C programmer) of the software module to be loaded on the target develops a source code program comprising a series of API function calls (redirect.f(x) and redirect.f(y)) corresponding to places where the actual API function calls (function x and function y) are used in the approach of figure 10a. The redirect functions simply redirect the function call to the memory location of a specific entry within a specified VOS or OS function pointer table (held at some - unknown at compile time - location in heap or shared memory within an array). The C source code is compiled by a compiler into object code which again comprises binary machine code, however there are no symbols (X and Y) corresponding to the functions in the source code. Instead, the redirect functions are simply compiled into jump (or branch) instructions to the memory location held in an entry (each entry corresponds to one API function) within the memory resident function table that is loaded at run-time on the target platform.

In this manner multiple threads of execution can run the software module code using different API implementation code without any need to dynamically re-link the software module.

The compiler translates the redirect functions to relative memory pointers, which at run-time are relative to the start of the OS or VOS table, and hence point at the appropriate execution environment specific function indicated by the object code. In this case, the source code needs to be written using the redirect functions rather than the API type functions of figure 10a.

In an alternative arrangement, a prior art source code program is translated by a modified compiler into the same object code, the compiler translating the C specific functions (eg function x) into redirect function call redirect.f(x) to allow the use of the (dynamically loaded at run-time) function table .

When this software module object code is loaded into memory, it is passed a reference to the platform specific mapping table (such as start address in memory) which corresponds to a placed in heap or shared memory. A default table of function pointers can be loaded at a predetermined relative memory location with respect to the object code is also possible for instances in which the software module does not contain an entry point function or other means to pass in the table reference pointer.

The platform can then execute this object code by running through the series of instructions that are compiled from the redirect.f(x) which re-direct (jump or branches) the program counter to the memory value corresponding table entry (redirect.f(x)) which in is the memory location of the actual OS or VOS library function (mem.loc(x)) on the platform. The function is executed and the program counter returns to where the jump (or branch) occurred in the software module object code

It can be seen that this allows the loadable software modules that are compiled into position independent code (i.e. code that can be executed from any memory address) to be platform independent in the sense that the platform (operating system, dynamic linker or Java virtual machine) does not need to have knowledge of the specific language and semantics of the software module code and how it interacts with other modules. It can also be seen that the source code can be independent of language, as the compiled object code contains the same pointers to the mapping table rather than predetermined symbols that a dynamic loader would need to interpret and replace with memory locations for platform specific functions. For example a program written in C, VisualBasic or Pascal will each be compiled into the same object code of relative function pointers which a passed a starting point in memory where the execution environment specific functions are located, the relative pointers indicating the relative location of the corresponding function from this start point. This allows vendors to provide a software module (object code) which can be written in any language, and which is independent of the platform.

Finally, each thread or process executing the software module code can do so with different library function table mappings to allow the behaviour of the same piece of code to be completely different in the way in which library functions are implemented. Therefore, one thread of execution (on the memory resident binary or byte code module) can call library functions that implement a lightweight set of library functions to optimise for performance and another thread of execution (of the same memory resident code) can use heavyweight library function implementation to optimise for security for instance.

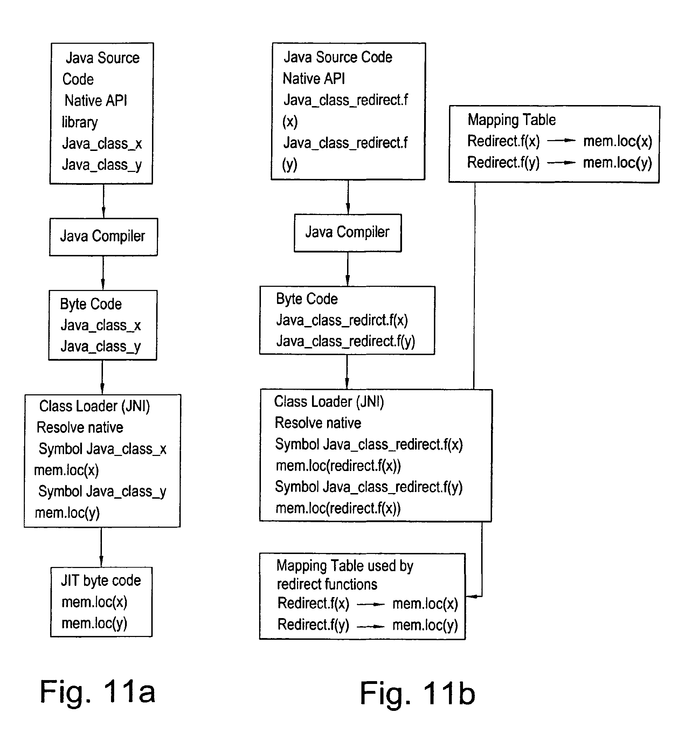

Referring to figures 11a and 11b, a dynamic linking (class loader) and function pointer passing methods are shown respectively, for a Java language based layer program. The main difference between the native and Java software modules is that in Java an extra layer of indirection is introduced to traverse between Java and Native software modules. The Java software module has a Java native interface method redirect.m(x) and redirect.m(y) that correspond to the native library functions Java_class_redirect.f(x) and Java_class_redirect.f(y) respectively. The Java native interface methods are mapped to native functions by the class loader. Normally when using standard JVM class loaders the native library module has to be loaded using the System.LoadLibrary method. However, it is also possible to create a custom Java class loader that may use other methods to load classes and libraries.

Then the class loader will resolve the native symbols used in the Java native interface class (mem.loc(redirect.f(x)) and mem.loc(redirect.f(y))) in this example. These redirect functions will then operate in the same manner as native redirect functions and use the mapping table to redirect the function call to the real functions mem.loc(x) and mem.loc(y).

It is possible that the Java class loader is customised to eliminate this intermediate step of loading native interface libraries as this is obviously performed in a platform specific manner and requires that each platform has the corresponding set of interface libraries to enable the actual native API libraries to be accessed.

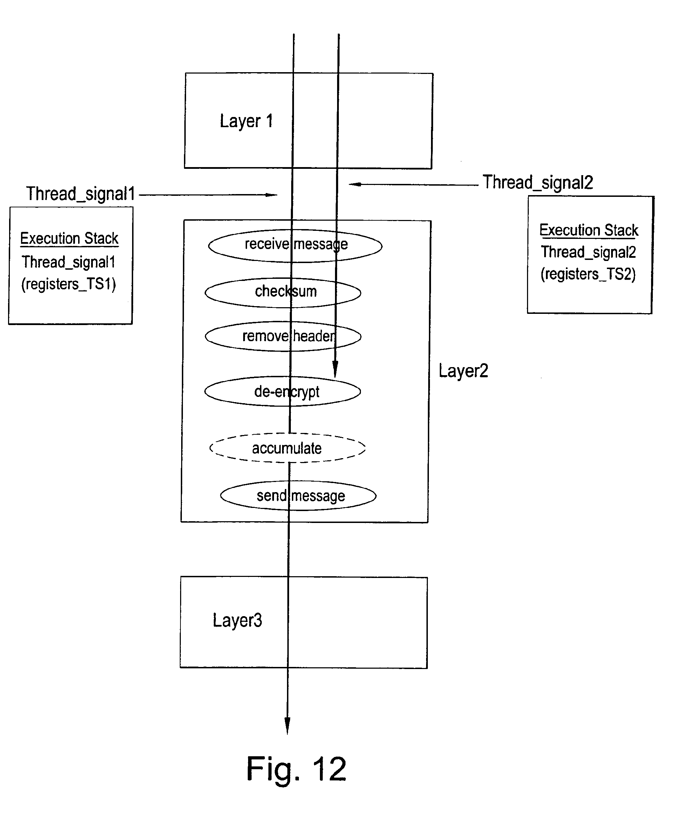

Figure 12 illustrates a thread per message approach to the implementation of the protocol stack. In this approach a thread is associated with each packet or signal traversing the protocol stack. In the example shown thread_ signal is associated with protocol message signal which is processed by layer1 within the stack instance then continues onto layer2 where the message is processed by the various functions or sub-modules shown (the packet or protocol message processing part of the code block or module in figure 8), and execution continues on to layer3 where the message is further processed. Similarly thread_ signal2 is associated with protocol message signal2 which is passed through layer1 and on to layer2 where at the particular point in time shown it has reached the "checksum" sub-function of layer2. This approach is similar to existing proposed frameworks however it suffers the drawback that different execution environments with different security and performance configurations that are provided by most multi-tasking operating systems cannot be easily used for distinguishing between different LLI, instead a customised scheduler would need to be implemented that could pre-empt the threads as necessary based on the LLI .

The accumulate function is shown in dashed outline, and not described above for ease of explanation. Where an accumulation function is implemented in the thread per message approach, there are two possibilities for implementation. One is to simply terminate the thread, however this relies on another thread monitoring the buffer in order to serve the buffered packets. The alternative is to return back to the calling function, and then the thread of execution can be used to process another message. This is more attractive than terminating threads because the thread creation latency and overhead can be very high on operating systems unless a very lightweight thread model is implemented.

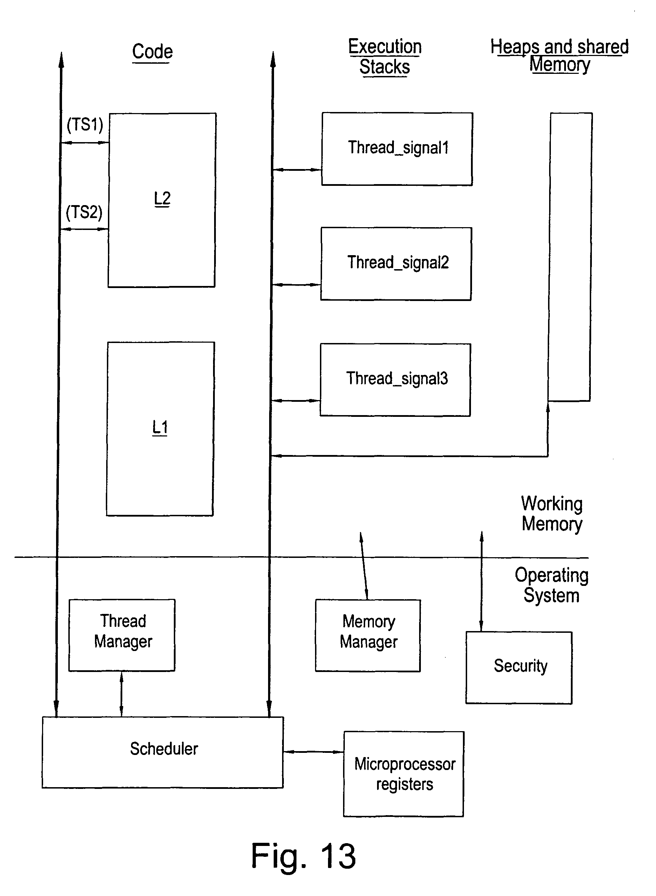

This is seen schematically in Figure 13 in which two code blocks 2 are shown in working memory, together with execution stacks associated with various threads of execution through these code blocks, as well as heaps and other shared memory objects. The various execution stacks will store various parameters such as the current state of the microprocessor registers, static data within functions and code modules and for function call parameter passing. A scheduler and thread manager controls operation of the various threads in a known manner, loading the microprocessor registers with the appropriate contents of a respective stack for the current or live thread, and storing the contents of the registers in the appropriate stack for the thread that has just been switched (known as context switching). It can be seen that for example that the point of execution for thread_signal 1 in the L2 block of code (TS1) has progressed further through the code than thread_signal 2 (TS2) - where (TS1) and (TS2) represent the program counter value for each thread, and therefore indicate which point in the code module to execute next for that thread. Various other execution stacks will be associated with other signals passing through the various code blocks L1-L5 of the protocol stack. It can be seen that each thread is associated with a single signal and "follows it" through the protocol stack in a synchronous manner.

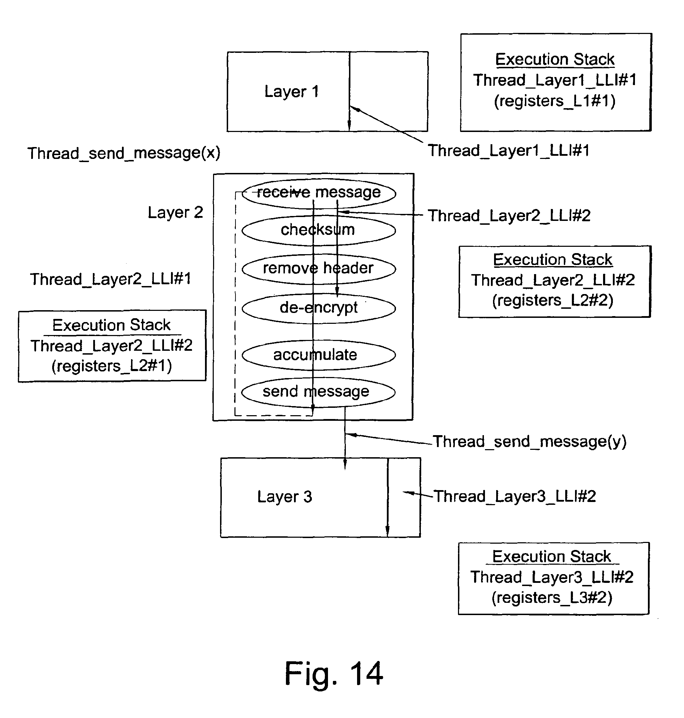

A further embodiment by contrast uses a thread per LLI as illustrated in Figure 14. Thread_ layer2_LLI#1 corresponds to one thread within the layer2 layer or code module which has received a signal or packet (protocol message) from a lower layer (for example layer1). The thread processes this through the layer's various sub-functions and passes the processed output (signal, packet or message) to a higher layer (for example layer 3). It then returns to the receive message or input function of its associated layer2, ready to process the next protocol message. Similarly thread_ layer2_LLI2 is associated with a separate packet or protocol message in the same layer (layer 2) as the first thread, but in a different instance or LLI. At the point in time shown, this second thread or point of execution has reached the de-encrypt sub-functions of layer2. Once each thread has processed a protocol message through its LLI it returns to the idle state and calls the *receive_message* operating system function to await a new packet from the lower layer. The message passing between the LLI's is handled by the execution environment, possibly using a different operating system thread or process (eg thread_send_message(x)) from either of the LLI's involved when the execution environments executing the LLI are resident on separate physical processors. The receive_message function simply waits for and retrieves a message in a predetermined message queue. Similarly the send_message function puts a message on a predetermined message queue.

The advantage of this thread-per-LLI approach over the previous approach is that each LLI can be configured to operate in a different execution environment (if necessary) with different priority (if appropriate) and with different security measures in place to prevent any badly behaved software module from affecting the operation of other LLI.

Again the accumulate function has been shown in dashed outline to simplify the initial explanation, however as this approach to the protocol stack is intrinsically asynchronous in nature (i.e. has accumulation of messages) then it is attractive to use asynchronous message passing so that the messages (packets) are buffered in a common and persistent manner that is accessible to both the sender and receiver. If the accumulation is performed naturally within the layer code (as is the case in the thread per message approach) then the message data must be copied from the sender to the accumulation buffer and then copied again out of the buffer and onto the next layer.

Having persistent shared memory queues allows messages to be posted to queues without the need for any data copying. Copying in protocol stack implementations should be minimised to get good performance. Therefore, if the send_message function simply puts a pointer to the message in the recipients message queue there is no data copying at all and the recipient can still access the data in the same manner. The other advantage is that when one layer instance LLI is being reconfigured (i.e. replaced) with another LLI then the queue is still there and the message data is still there and so nothing is lost and processing can continue as if nothing had happened.

A further advantage is that during upgrading or replacement of a LLI in the stack, protocol messages (signals) being processed by a LLI not being upgraded are not affected. Also, if necessary pre-execution switching can be achieved by re-directing packets destined for the old instance to the queues that will be used by the new instance or by suspending the old instance (and thus prevent further processing by the old version without discarding the packets). This is possible, for example, if the *send_message* and *receive_message* functions are implemented with persistent shared memory queueing and the queues can then be re-associated by the CM sending bind messages to the LLI instance below and above the new LLI version instance prior to the instantiation of the new LLI, as the packets will start to be queued in readiness for the new LLI instance. This approach is attractive because the instantiation of a new LLI can be time consuming and if for example the switch is from an insecure to a secure LLI version the continued processing of packets in an insecure manner may open up vulnerabilities in the system.

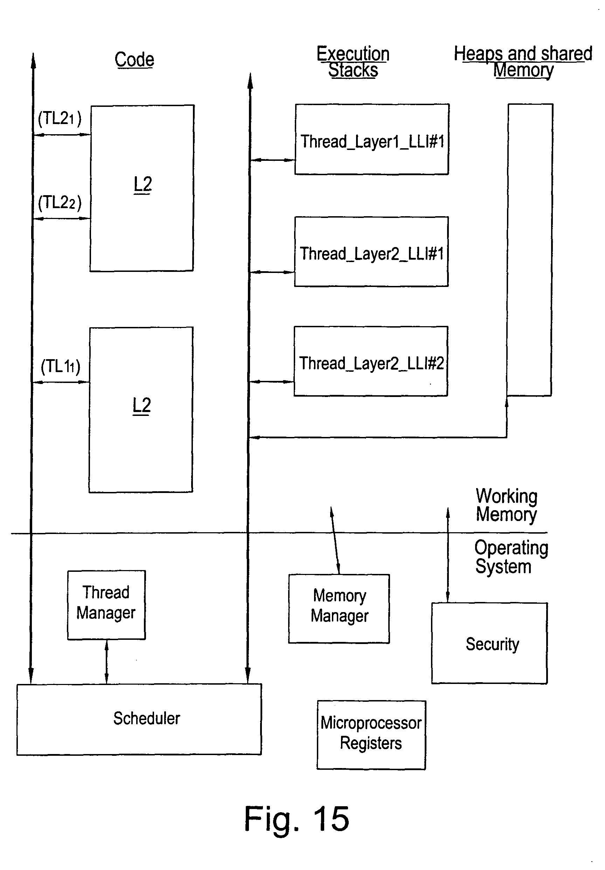

Figure 15 shows a schematic analogous to Figure 13 of the thread per message approach, but showing execution stacks corresponding to a thread per instance approach. For example two threads are shown associated with the layer2 code module, however each is associated with a different instance (LLI) of L2 as opposed to different protocol messages within L2. (TL2₁), (TL2₂) and (TL1₁) illustrate program counter values or positions in the code module for each LLI thread.

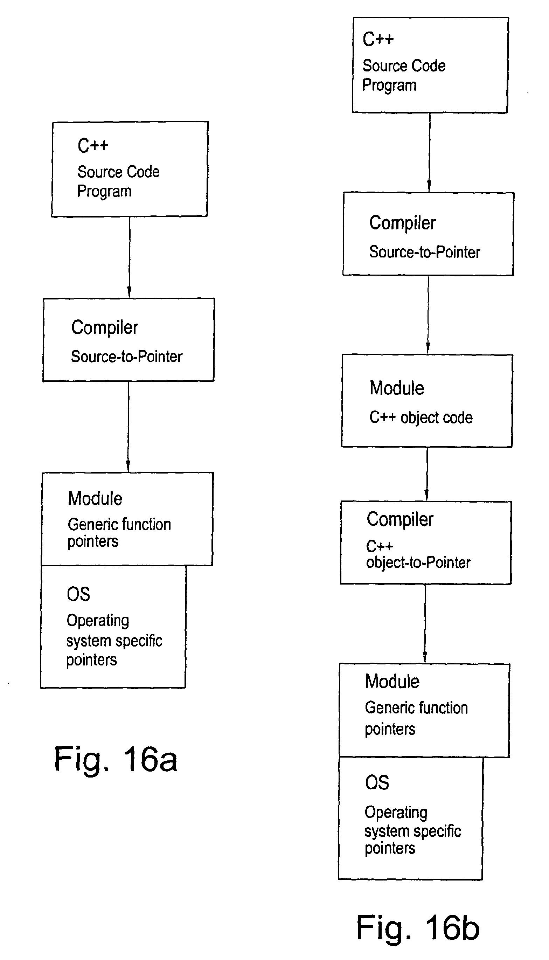

Figures 16a and 16b illustrate different routes for arriving at a code module for application in an embodiment. In figure 16a, a vendor develops a C++ source code program, which is compiled by a "source-to-pointer" compiler which translates the source code into a generic execution code module format comprising a series of pointers corresponding to generic functions in a functions template. The pointers are in a common data format as previously described, and are relative memory pointers to corresponding operating system specific functions in a OS table or object. For example a first generic function (eg Func#1 which is create_new_LLI_ corresponds to a first operating system specific function in the OS. Knowing where the corresponding OS is in memory, the execution environment is then pointed to properly formatted execution environment specific functions in the OS as it executes the module.

In an alternative arrangement shown in figure 16b, the vendor develops the same C++ source code program which is then compiled by a standard C++ compiler into a platform specific C++ code module. A further compiler is then required to convert this module into a generic function pointer code module as described above and suitable for execution with the OS (and in some embodiments a VOS).

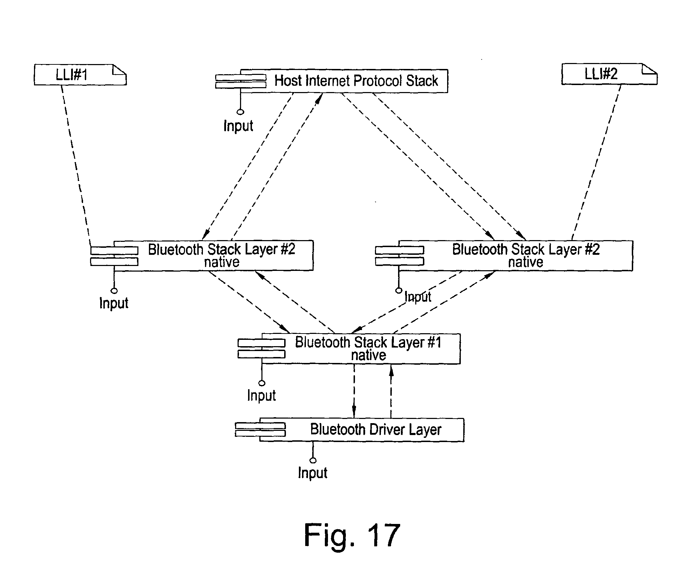

Figure 17 shows an example implementation using some of the embodiments described above. A terminal device with Bluetooth capability runs a standard Bluetooth protocol stack within native language software layers (software layers #1 and #2). The Bluetooth stack uses the above-described Bind functionality that enables the platform operating system and language independent protocol layers to be dynamically linked together. Two protocol stack instances are shown (Instance#1 and Instance#2) can be configured to provide different Bluetooth services. For example, a LAN access profile instance and a voice over IP or Bluetooth network encapsulation profile instance. The LAN access profile is then used to perform web browsing using a private Bluetooth access point and the voice over IP profile is used to make telephone calls via the same access point at the same time.

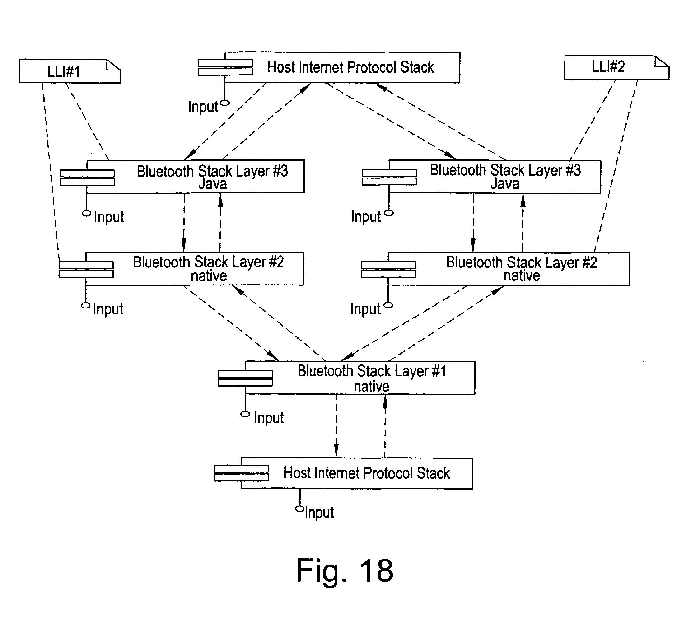

The Bluetooth stack can then be customized by adding support for a new profile using a downloaded Java layer (layer #3) as shown in Figure 18. This layer provides (for example) enhanced security or performance or new service functionality. The Java layer is dynamically loaded and new layer instances (LLI#1 and LLI#2) bound to the existing native language Bluetooth stack without the need to restart the Bluetooth stack by virtue of the embodiments utilised. Therefore, existing Bluetooth connection sessions are not disrupted. The new layer can then be used to instance an enhanced security profile that is used to encrypt and decrypt the data between the terminal and access point.

To support operating system independence, the operating system function table of the platform specific functions necessary to be used within the module for interacting with other modules within the protocol stack (for example functions to allow shared memory allocation and thread messaging etc.) is used. The bind message will also determine which other modules are allowed to interact with it and execution environment mechanisms will exist to verify the authenticity of these sources. The bind message must also contain all the necessary initial configuration data required by the protocol layer.

The layers within this Bluetooth stack are instanced using different threads of execution and each layer utilises the VOS or OS *receive_message* and *send_message* as the protocol message entry and output points respectively to allow the VOS or OS to implement interaction mechanisms appropriate for the chosen execution environment of the LLI. The threads or processes can be identified by the unique LLI name, which consists of a unique layer name ("Bluetooth stack layer #3" in this case) and a layer instance identifier ("LLI#1" and "LLI#2" in this case). In this manner the thread name is used to uniquely identify the layer instances. The VOS and OS can employ operating system specific mechanisms to support the interaction between LLI and scheduling of the LLI threads and processes or proprietary and highly optimised mechanisms can also be employed. This can be optimised in terms of security, performance or even in terms of resource utilisation such as memory and power consumption.

This approach enables LLI to be generated with different configurations. Each LLI is configured during the binding process with a bind signal which identifies not only the other LLI with which the LLI will communicate but also the configuration data to use for the particular instance.

The VOS supported LLI message queues can be held in a persistent shared memory to enable dynamic upgrading of software while the protocol stack is still active. The rebinding of LLI is also possible to permit the insertion of layers into active protocol stacks.

The process of configuring a new layer (Bluetooth stack layer #3) into the protocol stack is as follows:
1. The first step is to start execution of "Bluetooth stack layer #3" by calling the associated module entry point. In the case of Java module the class file is loaded into the JVM environment selected by the CM. The module loads the default VOS or OS API if it is not already loaded. Then the *run* method is automatically called by the JVM and the layer software (module) calls the load_template function in order to be subsequently able to access configuration and message data and calls the receive_message function to wait for a bind message.
2. A bind message is passed to the "Bluetooth stack layer #3" thread with the necessary configuration information,. The thread then creates the new LLI instance by calling the VOS or OS *create_new_LLI* function. Within the new LLI the LLI specific VOS and/or OS table is loaded if necessary. The thread "Bluetooth stack layer #3 instance #1" is created and an OK response is sent back. The new LLI executes the generic load_template function (if a different template is required) to allow access to the messages and configuration data and then calls receive_message in order to wait for the next message.
3. A rebind request message to "Bluetooth stack layer #2 instance #1", which responds with an OK message to confirm the rebinding and all subsequent packets originally destined for the "Host Internet Stack" are now sent to "Bluetooth stack layer #2 LLI #1".
4. A rebind message to "Host Internet Stack" and the routing tables are updated and an OK response is received.
5. The LLI #1 is now active the same procedure is repeated for layer #3 LLI#2.

In order that the Java Bluetooth stack layer #3 can easily interoperate with the native language Bluetooth stack layer #2 and Host Internet Stack, the above described common VOS and/or OS supported mechanisms for interaction and thread and process scheduling are used. The method used for accessing this common functionality in a platform independent manner is by means of dynamically loadable VOS and/or OS function libraries.

When the "Bluetooth stack layer #3" thread is instanced within the JVM environment a Java call to load a default VOS and/or OS library is made. The VOS and/or OS library contains a set of system resource related handling functions. These include as a minimum :
- Signal and memory allocation functions
- Thread creation (and destruction) functions
- Message sending and receiving functions
- Configuration and signal data access functions

The VOS and/or OS library of functions is subsequently used to communicate with other LLI and access configuration data (using the appropriate loaded template). The generic LLI and VOS functions can be supported on a number of different operating systems and can be accessed from many different languages and virtual machine environments. The library of functions also provides controlled access to message queues, signal and configuration data. For example, the library of functions can restrict the access to configuration data based on LLI identifier and also control the use of message sending and receiving to appropriately authorized sources and destinations. In this manner a secure language and operating system independent protocol stack execution environment is created.

In this manner for example "Bluetooth stack layer #3 LLI #1" can be created with a certain set of encryption functionality settings. These settings can be different in "Bluetooth stack layer #3 LLI#2" and are defined in the binding message used in the binding process. Then it is not possible for LLI#2 to access the parameters of LLI#1 and vice versa and also it is not possible for LLI#1 to intercept packets intended for LLI#2 and vice versa.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as reprogrammable logic gate arrays. Similarly the code may comprise code for a hardware description language such as Verilog ^{TM} or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analog array or similar device in order to configure analog hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A method of providing a communications protocol for processing a signal in a processing apparatus having a processor and memory, the protocol defined by a plurality of protocol layers; the method comprising:
loading a software module into the memory, the module arranged to receive and process said signal according to a set of generic functions corresponding to one of said layers, the module comprising generic function pointers corresponding to said generic functions in a function mapping object;
loading said function mapping object into the memory, the object comprising apparatus specific function pointers corresponding to the generic functions in order to map a said generic function to one or more apparatus specific functions;
executing the module according to said mapped apparatus specific functions in order to process received signals according to said protocol layer.

2. A method according to claim 1 wherein the module is arranged to exchange protocol messages corresponding to said signal with other modules, the other modules arranged to process said signal according to a set of generic functions corresponding to other said layers.

3. A method according to claim 2 further comprising loading said other software modules into the memory, the other modules comprising generic function pointers corresponding to said generic functions in a function mapping object;
for each other module loading said function mapping object into the memory, the object comprising apparatus specific function pointers corresponding to the generic functions in order to map a said generic function to one or more apparatus specific functions;
executing the other modules according to said mapped apparatus specific functions in order to process received signals according to said protocol layer.

4. A method according to claim 2 or 3 and further comprising the or each loaded software module receiving a bind message comprising an identifier for another said module, the first module arranged to exchange protocol messages with the other module identified by said bind message.

5. A method according to any one of claims 2 to 4 wherein the module has different configuration options for processing said protocol messages.

6. A method according to claim 5 wherein said bind message comprises an identifier for determining which said configuration options to implement in the execution of said module.

7. A method according to any one preceding claim wherein the protocol messages, the bind messages and the generic function pointers are in a common generic format.

8. A method according to any one preceding claim and further comprising:
loading a second software module into the memory, the second module arranged to receive and process said signal according to a set of generic functions corresponding to a second of said layers, the second module comprising generic function pointers corresponding to said generic functions in a second function mapping object;
loading said second function mapping object into the memory, the object comprising second apparatus specific function pointers corresponding to the generic functions in order to map a said generic function to one or more second apparatus specific functions;
executing the second module according to said mapped second apparatus specific functions in order to process received signals according to said protocol layer; such that the first and second modules are executed in different execution or apparatus specific environments.

9. A method according to any one preceding claim wherein said module is language independent.

10. A method according to claim 9 further comprising providing high-level software language code for processing said signal according to said set of generic functions corresponding to a said layer; and compiling said code into said language independent software module.

11. A method according to any one preceding claim further comprising executing the module in a second execution process according to said mapped apparatus specific functions in order to process received signals according to said protocol layer and in order to provide two logical instances of said module.

12. A method according to any one preceding claim further comprising
loading a second function mapping object into the memory, the object comprising second apparatus specific function pointers corresponding to the generic functions in order to map a said generic function to one or more second apparatus specific functions;
and in addition to said first execution process, executing the module in a second execution process according to said mapped second apparatus specific functions in order to process received signals according to said protocol layer and in order to provide two logical instances of said module, such that the two instances of the module are executed according to different function mapping objects.

13. A method according to claim 12 wherein the two execution processes execute in different execution or apparatus specific environments.

14. A method according to claim 12 or 13 further comprising the second instance of the loaded software module receiving a second bind message comprising an identifier for another said module, the second instance of the first module arranged to exchange protocol messages with the other module identified by said second bind message.

15. A method according to claim 14 wherein the module has different configuration options for each said instance for processing said protocol messages, and wherein each said bind message comprises an identifier for determining which said configuration options to implement in the execution of said respective module instance.

16. A method according to any one preceding claim wherein the or each said module is executed in a separate execution process.

17. A method according to claim 14, 15 or 16 wherein each said execution processes is a thread.

18. A method according to claim 2 wherein said exchange of protocol messages is by a separate execution process from that of the module execution.

19. A method according to claim 18 wherein the messages are posted and retrieved from persistent message queues in the memory.

20. A method according to any one preceding claim further comprising
loading an intermediate function mapping object into the memory, the object comprising intermediate function pointers corresponding to the generic functions and one or more apparatus specific functions in the first function mapping object in order to map a said generic function to one or more intermediate function pointers and further to one or more apparatus specific functions in the first function mapping object.

21. A method according to any one preceding claim wherein the protocol is a communications protocol stack, and preferably a wireless communications protocol stack.

22. A method of providing a dynamically reconfigurable protocol stack for processing a signal in a processing apparatus having a processor and memory, the protocol defined by a plurality of protocol layers; the protocol stack comprising:
a number of software modules loaded into the memory, each module arranged to receive and process said signal according to a set of generic functions corresponding to one of said layers, the modules comprising generic function pointers corresponding to said generic functions in a respective function mapping object;
a number of function mapping object loaded into the memory, the objects comprising apparatus specific function pointers corresponding to the generic functions in order to map a said generic function to one or more apparatus specific functions in a respective module;
the modules executed according to said mapped apparatus specific functions in order to process received signals according to a said respective protocol layer; the method comprising:
each module receiving a bind message comprising an identifier for another said module, the receiving module arranged to exchange protocol messages with the other module identified by the respective bind message.

23. A method according to claim 22 further comprising:
loading an upgrade software module into the memory, the module arranged to receive and process said signal according to a set of generic functions corresponding to one of said layers, the module comprising generic function pointers corresponding to said generic functions in a function mapping object;
loading said function mapping object into the memory, the object comprising apparatus specific function pointers corresponding to the generic functions in order to map a said generic function to one or more apparatus specific functions;
executing the module according to said mapped apparatus specific functions in order to process received signals according to said protocol layer;
the module receiving a bind message comprising an identifier for another said module, the receiving module arranged to exchange protocol messages with the other module identified by the respective bind message.

24. A method of for processing a signal according to a protocol, the protocol defined by a plurality of protocol layers; the method comprising:
receiving and processing said signal according to a set of generic functions corresponding to one of said layers;
mapping the generic functions to apparatus specific functions;
executing the mapped apparatus specific functions in order to process the received signals according to said protocol layer.

25. A method according to claim 24 further comprising receiving and processing said signal according to a set of generic functions corresponding to the other said layers;
mapping the generic functions to apparatus specific functions;
executing the mapped apparatus specific functions in order to process the received signals according to said other protocol layers.

26. A method according to claim 25 wherein said receiving and processing is arranged such that the order of said generic functions corresponds to said protocol stack.

27. A method according to claim 26 further comprising receiving a bind message in order to determine the order of said generic functions by which to process said signal.

28. A method according to any one of claims 24 to 28 wherein said receiving and processing according to the generic functions of each layer are implemented by executing a software module.

29. A method according to any one of claims 24 to 28 further comprising mapping the generic functions to intermediate functions, then mapping the intermediate functions to said apparatus specific functions.

30. Apparatus for providing a communications protocol for processing a signal, the apparatus having a processor and memory, the protocol defined by a plurality of protocol layers; the apparatus comprising:
means for loading a software module into the memory, the module arranged to receive and process said signal according to a set of generic functions corresponding to one of said layers, the module comprising generic function pointers corresponding to said generic functions in a function mapping object;
means for loading said function mapping object into the memory, the object comprising apparatus specific function pointers corresponding to the generic functions in order to map a said generic function to one or more apparatus specific functions;
means for executing the module according to said mapped apparatus specific functions in order to process received signals according to said protocol layer.

31. An apparatus according to claim 30 wherein the module is arranged to exchange protocol messages corresponding to said signal with other modules, the other modules arranged to process said signal according to a set of generic functions corresponding to other said layers.

32. An apparatus according to claim 31 further comprising means for loading said other software modules into the memory, the other modules comprising generic function pointers corresponding to said generic functions in a function mapping object;
means for each other module for loading said function mapping object into the memory, the object comprising apparatus specific function pointers corresponding to the generic functions in order to map a said generic function to one or more apparatus specific functions;
means for executing the other modules according to said mapped apparatus specific functions in order to process received signals according to said protocol layer.

33. An apparatus according to claim 31 or 32 and further comprising means for sending the or each loaded software module a bind message comprising an identifier for another said module, the first module arranged to exchange protocol messages with the other module identified by said bind message.

34. An apparatus according to any one of claims 31 to 33 wherein the module has different configuration options for processing said protocol messages.

35. An apparatus according to claim 4 wherein said bind message comprises an identifier for determining which said configuration options to implement in the execution of said module.

36. An apparatus according to any one of claims 30 to 35 wherein the protocol messages, the bind messages and the generic function pointers are in a common generic format.

37. An apparatus according to any one of claims 30 to 38 and further comprising:
means for loading a second software module into the memory, the second module arranged to receive and process said signal according to a set of generic functions corresponding to a second of said layers, the second module comprising generic function pointers corresponding to said generic functions in a second function mapping object;
means for loading said second function mapping object into the memory, the object comprising second apparatus specific function pointers corresponding to the generic functions in order to map a said generic function to one or more second apparatus specific functions;
means for executing the second module according to said mapped second apparatus specific functions in order to process received signals according to said protocol layer; such that the first and second modules are executed in different execution or apparatus specific environments.

38. An apparatus according to any one of claims 30 to 37 wherein said module is language independent.

39. An apparatus according to claim 38 further comprising means for compiling high-level software language code for processing said signal according to said set of generic functions corresponding to a said layer into said language independent software module.

40. An apparatus according to any one of claims 30 to 39 further comprising means for executing the module in a second execution process according to said mapped apparatus specific functions in order to process received signals according to said protocol layer and in order to provide two logical instances of said module.

41. An apparatus according to any one preceding claim further comprising
means for loading a second function mapping object into the memory, the object comprising second apparatus specific function pointers corresponding to the generic functions in order to map a said generic function to one or more second apparatus specific functions;
and in addition to said first execution means, means for executing the module in a second execution process according to said mapped second apparatus specific functions in order to process received signals according to said protocol layer and in order to provide two logical instances of said module, such that the two instances of the module are executed according to different function mapping objects.

42. An apparatus according to claim 41 wherein the two execution processes execute in different execution or apparatus specific environments.

43. An apparatus according to claim 41 or 42 further comprising the second instance of the loaded software module receiving a second bind message comprising an identifier for another said module, the second instance of the first module arranged to exchange protocol messages with the other module identified by said second bind message.

44. An apparatus according to claim 43 wherein the module has different configuration options for each said instance for processing said protocol messages, and wherein each said bind message comprises an identifier for determining which said configuration options to implement in the execution of said respective module instance.

45. An apparatus according to any one of claims 30 to 44 wherein the or each said module is executed in a separate execution process.

46. An apparatus according to claim 43, 44 or 45 wherein each said execution means comprises a thread.

47. An apparatus according to any one of claims 30 to 46 further comprising
means for loading an intermediate function mapping object into the memory, the object comprising intermediate function pointers corresponding to the generic functions and one or more apparatus specific functions in the first function mapping object in order to map a said generic function to one or more intermediate function pointers and further to one or more apparatus specific functions in the first function mapping object.

48. An apparatus according to any one of claims 30 to 47 wherein the apparatus is a communications terminal, a base station, or a network device.

49. An apparatus for providing a dynamically reconfigurable protocol stack for processing a signal in a processing apparatus having a processor and memory, the protocol defined by a plurality of protocol layers; the apparatus comprising:
a number of software modules loaded into the memory, each module arranged to receive and process said signal according to a set of generic functions corresponding to one of said layers, the modules comprising generic function pointers corresponding to said generic functions in a respective function mapping object;
a number of function mapping objects loaded into the memory, the objects comprising apparatus specific function pointers corresponding to the generic functions in order to map a said generic function to one or more apparatus specific functions in a respective module;
means for executing the modules according to said mapped apparatus specific functions in order to process received signals according to a said respective protocol layer.

50. An apparatus according to claim 49 further comprising means for sending each module a bind message comprising an identifier for another said module, the receiving module arranged to exchange protocol messages with the other module identified by the respective bind message.

51. An apparatus according to claim 50 further comprising:
means for loading an upgrade software module into the memory, the module arranged to receive and process said signal according to a set of generic functions corresponding to one of said layers, the module comprising generic function pointers corresponding to said generic functions in a function mapping object;
means for loading said function mapping object into the memory, the object comprising apparatus specific function pointers corresponding to the generic functions in order to map a said generic function to one or more apparatus specific functions;
means for executing the module according to said mapped apparatus specific functions in order to process received signals according to said protocol layer;
the module receiving a bind message comprising an identifier for another said module, the receiving module arranged to exchange protocol messages with the other module identified by the respective bind message.

52. An apparatus for processing a signal according to a protocol, the protocol defined by a plurality of protocol layers; the apparatus comprising:
means for receiving and processing said signal according to a set of generic functions corresponding to one of said layers;
means for mapping the generic functions to apparatus specific functions;
means for executing the mapped apparatus specific functions in order to process the received signals according to said protocol layer.

53. An apparatus according to claim 52 further arranged for receiving and processing said signal according to a set of generic functions corresponding to the other said layers;
means for mapping the generic functions to apparatus specific functions;
means for executing the mapped apparatus specific functions in order to process the received signals according to said other protocol layers.

54. An apparatus according to claim 53 wherein said receiving and processing is arranged such that the order of said generic functions corresponds to said protocol stack.

55. An apparatus according to claim 54 further comprising means for receiving a bind message in order to determine the order of said generic functions by which to process said signal.

56. A method according to any one of claims 52 to 55 wherein said receiving and processing according to the generic functions of each layer are implemented by executing a software module.

57. An apparatus according to any one of claims 52 to 56 further comprising means for mapping the generic functions to intermediate functions, then mapping the intermediate functions to said apparatus specific functions.

58. A program for controlling a processing apparatus to carry out the method according to any one of claims 1 to 29.

59. A configurable apparatus configured according to any one of claims 30 to 57.

60. A carrier medium carrying processor control code for implementing a method or apparatus according to any one of claims 1 to 57.
